# EUROPÄISCHE PATENTSCHRIFT

(11) **EP 3 060 842 B1**
(45) Veröffentlichungstag und Bekanntmachung des Hinweises auf die Patenterteilung: **25.03.2020**
(21) Anmeldenummer: 14805168.3
(22) Anmeldetag: 20.10.2014
(51) Int. Cl.: F21S 41/141, F21S 41/16, F21S 41/20, F21S 41/265, F21S 41/275, F21S 41/43, F21S 43/14

(54) **MIKROPROJEKTIONS-LICHTMODUL FÜR EINEN KRAFTFAHRZEUGSCHEINWERFER**
MICROPROJECTION LIGHTING MODULE FOR A MOTOR VEHICLE HEADLIGHT
MODULE D'ÉCLAIRAGE À MICRO-PROJECTION DESTINÉ À UN PROJECTEUR DE VÉHICULE AUTOMOBILE

(30) Priorität: 25.10.2013 AT 506922013
(43) Veröffentlichungstag der Anmeldung: 31.08.2016
(73) Patentinhaber: ZKW Group GmbH, 3250 Wieselburg (AT)
(72) Erfinder: BAUER, Friedrich, A-3252 Bergland (AT); BÖHM, Gerald, A-3370 Ybbs (AT)
(74) Vertreter: Patentanwaltskanzlei Matschnig & Forsthuber OG
(86) Internationale Anmeldenummer: PCT/AT2014/050251
(87) Internationale Veröffentlichungsnummer: WO 2015/058227

(56) Entgegenhaltungen:
- EP-A2- 0 999 407
- CH-A- 296 715
- DE-A1- 2 235 201
- DE-A1- 4 105 213
- DE-A1- 10 039 086
- DE-C- 639 774
- O. DROSS ET AL: "Köhler integrators embedded into illumination optics add functionality", PROCEEDINGS OF SPIE, Bd. 7103, 1. Januar 2008 (2008-01-01), Seite 71030G, XP055022346, ISSN: 0277-786X, DOI: 10.1117/12.798111

## Beschreibung

Die Erfindung betrifft einen Kraftfahrzeugscheinwerfer ausgebildet als Beleuchtungsvorrichtung bzw. umfassend zumindest eine Beleuchtungsvorrichtung, wobei die eine bzw. die zumindest eine Beleuchtungsvorrichtung eine Anzahl an Mikroprojektions-Lichtmodulen (1) umfasst, wobei ein Mikroprojektions-Lichtmodul (1) umfasst:
*) zumindest eine Lichtquelle sowie
*) zumindest eine Projektionseinrichtung, welche das von der zumindest einen Lichtquelle austretende Licht in einen Bereich vor dem Kraftfahrzeug in Form von zumindest einer Lichtverteilung abbildet.

Das Dokument EP-A-0738904 offenbart einen Kraftfahrzeugscheinwerfer mit zwei Mikro-Optiken.

Aktuelle Lichtsysteme bzw. Lichtmodule oder Fahrzeugscheinwerfer, insbesondere unter Verwendung von Leuchtdioden als Lichtquellen verwenden aufwändige, hochgenaue und damit teure LED-Lichtquellen, deren Licht mittels einer Projektionsoptik, z.B. einer Linse, gegebenenfalls nach vorherigem Durchtritt des Lichtes durch eine Primär- bzw. Vorsatzoptik zu einer Lichtverteilung geformt wird. Aufgrund der hohen Kosten ist man üblicherweise bestrebt, möglichst effiziente Systeme zu schaffen. Dies führt aber zu Lichtsystemen etc., welche im Bauraumbedarf weiterhin vergleichbar mit herkömmlichen Halogen-Lichtmodulen sind.

Versuche, die Brennweite bzw. generell den (kleinsten) Abstand der Lichtquelle zu dem Reflektor zu verringern, um eine höhere Effizienz zu erhalten, führen dazu, dass das Lichtmodul etc. gegenüber Fertigungstoleranzen eine deutlich höhere Empfindlichkeit aufweist, wodurch eine höhere Effizienz, die einen kleineren Bauraum erlauben würde, aufwändige und damit kostenintensive Einstellkonzepte notwendig macht.

Es ist eine Aufgabe der Erfindung, einen Kraftfahrzeugscheinwerfer mit einem Lichtmodul zu schaffen, welches eine verringerte Bautiefe aufweist.

Weiters ist es eine Aufgabe der Erfindung, einen Kraftfahrzeugscheinwerfer mit einem Lichtmodul zu schaffen, welches möglichst toleranzunempfindlich ist.

Diese Aufgaben werden mit einem eingangs erwähnten Kraftfahrzeugscheinwerfer dadurch gelöst, dass erfindungsgemäß die Projektionseinrichtung umfasst:
-) eine Eintrittsoptik, welche aus einer Anzahl Mikro-Eintrittsoptiken besteht, welche vorzugsweise in einem Array angeordnet sind,
-) eine Austrittsoptik, welche aus einer Anzahl an Mikro-Austrittsoptiken besteht, welche vorzugsweise in einem Array angeordnet sind, wobei
   jeder Mikro-Eintrittsoptik genau eine Mikro-Austrittsoptik zugeordnet ist, wobei die Mikro-Eintrittsoptiken derart ausgebildet und/oder die Mikro-Eintrittsoptiken und die Mikro-Austrittsoptiken derart zueinander angeordnet sind, dass im Wesentlichen das gesamte aus einer Mikro-Eintrittsoptik austretende Licht genau nur in die zugeordnete Mikro-Austrittsoptik eintritt, und wobei das von den Mikro-Eintrittsoptiken vorgeformte Licht von den Mikro-Austrittsoptiken in einen Bereich vor dem Kraftfahrzeug als zumindest eine Lichtverteilung abgebildet wird, wobei zwischen der Eintrittsoptik und der Austrittsoptik zumindest eine Blendenvorrichtung angeordnet ist.

Die Formulierung "im Wesentlichen das gesamte .... austretende Licht" bedeutet dabei, dass danach getrachtet wird, tatsächlich den gesamten Lichtstrom, der aus einer Mikro-Eintritts-Optik austritt, einzig in die zugeordnete Mikro-Austritts-Optik einzustrahlen. Falls dies auf Grund der Gegebenheiten nicht möglich sein sollte, so ist danach zu trachten, zumindest so wenig Lichtstrom in die benachbarten Mikro-Austritts-Optiken einzustrahlen, dass sich dadurch keine nachteiligen optischen Effekte, wie Streulicht, das zu Blendung führen kann etc., ergeben.

Außerdem ist unter Formulierung "wobei die Mikro-Eintrittsoptiken derart ausgebildet und/oder die Mikro-Eintrittsoptiken und die Mikro-Austrittsoptiken derart zueinander angeordnet sind" auch zu verstehen, dass zusätzliche Maßnahmen, wie etwa Blenden (siehe weiter unten) vorgesehen sein können, die entweder ausschließlich oder vorzugsweise zusätzlich zu ihrer eigentlichen Funktion noch die Funktion haben, dass der gesamte Lichtstrom genau auf die zugeordnete Mikro-Austritts-Optik gerichtet ist.

Durch die Verwendung einer Anzahl bzw. Vielzahl von einander zugeordneten Mikro-Optiken anstelle einer einzigen Optik wie in herkömmlichen Projektionssystemen sind sowohl die Brennweiten als auch die Abmessungen der Mikro-Optiken an sich deutlich geringer als bei einer "herkömmlichen" Optik. Ebenso kann die Mittendicke gegenüber einer herkömmlichen Optik reduziert werden. Dadurch kann die Bautiefe der Projektionseinrichtung gegenüber einer herkömmlichen Optik deutlich verringert werden, durch die Verkleinerung der Optiken an sich wird aber auch eine gute bzw. sehr gute Effizienz (Wirkungsgrad) erreicht. Mit einer herkömmlichen Optik, welche in ihren Abmessungen im Wesentlichen unverändert bleibt und deren Brennweite verringert wird, kann hingegen zwar die Bautiefe verringert werden, allerdings verschlechtert sich dadurch der Wirkungsgrad.

Je größer die Anzahl der Mikro-Optik-Systeme ist, umso genauer lässt sich die gewünschte Lichtverteilung erzeugen, wobei eine Grenze nach oben hinsichtlich der Anzahl der Mikro-Optik-Systeme in erster Linie durch die jeweils verfügbaren Herstellungsverfahren begrenzt ist. Für die Erzeugung einer Abblendlichtfunktion können z.B. 30 - 40 Mikro-Optik-Systeme ausreichen bzw. günstig sein, wobei dies weder einen einschränkenden Wert nach oben oder unten sondern lediglich eine beispielhafte Anzahl beschreiben soll.

Ein solches Lichtmodul ist außerdem skalierbar, d.h., es können mehrere baugleiche oder ähnlich aufgebaute Lichtmodule zu einem größeren Gesamtsystem, z.B. zu einem Fahrzeugscheinwerfer zusammengesetzt werden.

Bei einer konkreten Ausführungsform der Erfindung ist vorgesehen, dass jede Mikro-Eintrittsoptik das durch sie durchtretende Licht in zumindest einen Mikro-Eintrittsoptik-Brennpunkt fokussiert.

Vorzugsweise ist dabei vorgesehen, dass ein Mikro-Eintrittsoptik-Brennpunkt jeder Mikro-Eintrittsoptiken in Lichtaustrittsrichtung vor der zugeordneten Mikro-Austrittsoptik liegt.

Jede Mikro-Eintrittsoptik verfügt somit über einen Brennpunkt, welcher zwischen Eintritts-optik und Austrittsoptik liegt, und in welchen Licht der zugehörigen Mikro-Eintrittsoptik fokussiert wird.

Insbesondere ist dabei vorgesehen, dass die Mikro-Eintrittsoptiken das durch sie durchtretende Licht in vertikaler Richtung jeweils auf den vor der Mikro-Austrittsoptik liegenden Mikro-Eintrittsoptik-Brennpunkt fokussieren, wobei vorzugsweise vorgesehen ist dass die Mikro-Austrittsoptiken einen jeweils mit dem Mikro-Eintrittsoptik-Brennpunkt der zugeordneten Mikro-Eintrittsoptik zusammenfallenden Brennpunkt aufweisen.

Licht wird also in den Brennpunkt fokussiert und anschließend nach dem Durchtritt durch die zugehörige Mikro-Austrittsoptik entsprechend in der vertikalen Richtung kollimiert und in einen Bereich vor dem Fahrzeug projiziert.

Der Vollständigkeit halber sei hier angeführt, dass der einfacheren Formulierung hier und generell im Rahmen dieser gesamten Offenbarung an anderen Stellen von einer Fokussierung "in einen Brennpunkt" gesprochen wird. Tatsächlich, d.h. in der Realität werden dabei allerdings die Lichtstrahlen nicht in einem einzelnen Brennpunkt fokussiert sondern werden in eine Brennfläche abgebildet, welche den besagten Brennpunkt enthält. Diese Brennfläche kann eine Brennebene sein, in der Regel ist diese Brennfläche aber in Folge von Abbildungsfehlern nicht eben sondern kann auch gekrümmt "ausgebildet" sein, d.h. die Lichtstrahlen werden in eine gekrümmte Fläche, welche den Brennpunkt enthält, abgebildet.

Weiters ist mit Vorteil vorgesehen, dass jedes Mikro-Optik-System bestehend aus Mikro-Eintrittsoptik und Mikro-Austrittsoptik das durch sie durchtretende Licht in horizontaler Richtung aufweitet.

Dazu fokussiert jede Mikro-Eintrittsoptik das durch sie durchtretende Licht in horizontaler Richtung auf einen Brennpunkt, welcher hinter der Mikro-Austrittsoptik liegt. Dieses Licht tritt weiters durch die Mikro-Austrittsoptik durch und wird von dieser in horizontaler Richtung in einen Brennpunkt fokussiert, welcher hinter der Mikro-Austrittsoptik liegt.

Vorzugsweise sind die Mikro-Eintrittsoptiken als Sammeloptiken ausgebildet, welche Licht in vertikaler und/oder horizontaler Richtung sammeln.

Es kann vorgesehen sein, dass die Mikro-Eintrittsoptiken als Freiform-Optiken ausgebildet sind.

Vorteilhafterweise ist weiters vorgesehen, dass die Mikro-Austrittsoptiken als Projektionsoptiken ausgebildet sind.

Beispielsweise kann vorgesehen sein, dass die Mikro-Austrittsoptiken als sphärische Linsen oder als asphärische Linsen ausgebildet sind.

Es kann auch vorgesehen sein, dass die Mikro-Austrittsoptiken als Freiform-Linsen ausgebildet sind.

Bei einer konkreten, besonders bevorzugten Ausführungsform der Erfindung ist vorgesehen, dass die einander zugewandten Grenzflächen von einander zugeordneten Mikro-Eintrittsoptiken und Mikro-Austrittsoptiken kongruent zueinander ausgebildet und vorzugsweise auch kongruent zueinander angeordnet sind.

"Kongruent ausgebildet" bedeutet dabei nichts anderes, als dass die Grenzflächen von einander zugeordneten Mikro-Optiken dieselbe Form der Grundfläche aufweisen, mit im Prinzip beliebiger räumlicher Anordnung. "Kongruent" angeordnet bedeutet, dass diese Grundflächen zusätzlich auch noch so angeordnet sind, dass sie entweder unmittelbar deckungsgleich zusammenfallen oder zwar beabstandet sind, bei einem Verschieben normal zu einer der Grundflächen aber deckungsgleich ineinander übergehen würden.

Von besonderem Vorteil ist es, wenn die optischen Achsen von einander zugeordneten Mikro-Eintrittsoptiken und Mikro-Austrittsoptiken parallel zueinander verlaufen, wobei es insbesondere von Vorteil ist, wenn die optischen Achsen zusammenfallen. Auf diese Weise wird das Lichtbild jedes einzelnen Mikro-Optik-Systems besonders exakt hinsichtlich seiner Lage abgebildet, sodass sich bei Überlagerung der einzelnen Lichtbilder zu einer gewünschten Gesamtlichtverteilung, z.B. eine Abblendlichtverteilung, diese in optischer Hinsicht optimal erzeugen lässt (z.B. optimale Überlagerung der einzelnen Hell-Dunkel-Grenzen, ...).

Weiters ist es zweckmäßig, wenn die Grenzflächen plan ausgebildet sind.

Die Grundflächen der Optiken können dabei z.B. hexagonal, rechteckig oder vorzugsweise quadratisch ausgebildet sein.

Um Lichtverteilungen mit definierten Formen, beispielsweise mit einer oder mehreren Hell-Dunkel-Grenzen, erzeugen zu können, kann vorgesehen sein, dass zwischen der Eintrittsoptik und der Austrittsoptik zumindest eine Blendenvorrichtung angeordnet ist.

Vorzugsweise liegt dabei die Blendenvorrichtung in einer Ebene, welche von den Mikro-Austrittsoptik-Brennpunkten aufgespannt ist.

Die Mikro-Austrittsoptik-Brennpunkte sind jene Brennpunkte, in welche die Mikro-Eintrittsoptiken in vertikaler Richtung fokussieren, und wo auch die Brennpunkte der Mikro-Austrittsoptiken liegen.

Bei einer konkreten Ausführungsform ist dabei vorgesehen, dass die Blendenvorrichtung für zumindest ein Paar von einander zugeordneten Mikro-Eintritts- und Mikro-Austrittsoptiken, vorzugsweise für mehrere Paare und insbesondere für alle Paare eine Blende mit jeweils zumindest einer, beispielsweise genau einer optisch wirksamen Blendenkante aufweist.

Beispielsweise kann dabei vorgesehen sein, dass alle Blenden identische Blendenkanten aufweisen.

Es kann aber auch vorgesehen sein, dass zumindest zwei Blenden unterschiedlich gestaltete Blendenkanten aufweisen.

Grundsätzlich weist eine Projektionseinrichtung, wie oben beschrieben, eine Anzahl an Mikro-Optik-Systemen, also Paaren bestehen aus jeweils einer Mikro-Eingangs-Optik und einer Mikro-Ausgangs-Optik auf. In der einfachsten Ausgestaltung ohne Blendenvorrichtung erzeugen alle Mikro-Optik-Systeme dieselbe Lichtverteilung, welche (Teil-)Lichtverteilungen in Summe z.B. eine Fernlichtverteilung bilden. Hier wird dabei der Einfachheit halber davon ausgegangen, dass mit genau einem Lichtmodul eine vollständige Lichtverteilung erzeugt wird. In der Praxis kann aber auch vorgesehen sein, dass zur Erzeugung der Gesamtlichtverteilung zwei oder auch mehrere erfindungsgemäße Lichtmodule verwendet werden. Dies kann z.B. dann sinnvoll sein, wenn etwa aus Platzgründen nicht eine Aufteilung der Bauteile auf unterschiedliche Positionen im Scheinwerfer notwendig ist.

Zur Erzeugung einer abgeblendete Lichtverteilung, etwa einer Abblendlichtverteilung, welche in bekannter Weise eine Hell-Dunkel-Grenze aufweist, kann nun vorgesehen sein, dass jedem Mikro-Optik-System mehr oder weniger identische Blenden im Strahlengang zugeordnet sind, sodass alle Mikro-Optik-Systeme eine Lichtverteilung mit einer Hell-Dunkel-Grenze erzeugen. Die Überlagerung aller Lichtverteilungen ergibt dann als Gesamtlichtverteilung die abgeblendete Lichtverteilung.

Die Blenden können dabei in diesem Fall wie auch in allen anderen als einzelne Blenden ausgeführt sein (z.B. in Form einer undurchlässigen Schicht, beispielsweise einer aufgedampften Schicht, etc.), welche die Blendenvorrichtung "bilden", es kann sich aber auch um einen Blendenvorrichtungs-Bauteil handeln, etwa eine ebene Folie etc., in welche entsprechende Öffnungen zum Durchtritt von Licht vorgesehen sind.

Weiters kann es auch vorgesehen sein, dass unterschiedliche Blenden vorgesehen sind, d.h., dass einer oder mehreren Mikro-Optik-Systemen eine erste Blende zugeordnet ist, einer oder mehreren anderen Mikro-Optik-Systemen eine andere Blende (oder keine Blende), etc., sodass unterschiedliche Mikro-Optik-Systeme unterschiedliche Lichtverteilungen bilden. Durch selektives Aktivieren einzelner Mikro-Optik-Systeme, wozu es allerdings notwendig ist, dass diesen eigene, zumindest gruppenweise separat ansteuerbare Lichtquellen zugeordnet sind, können auf diese Weise einzelne, unterschiedliche Lichtverteilungen erzeugt werden, die auch in Überlagerung betrieben werden können.

Bei einer ersten Variante der Erfindung ist vorgesehen, dass die Projektionseinrichtung bestehend aus Eintrittsoptik und Austrittsoptik, und gegebenenfalls aus Blendeneinrichtung, einteilig ausgebildet ist.

Bei einer zweiten Variante ist vorgesehen, dass die Projektionseinrichtung bestehend aus Eintrittsoptik und Austrittsoptik aus zwei voneinander getrennten Bauteilen gebildet ist.

Ist bei einer solchen Ausführungsform weiters noch eine Blendenvorrichtung vorgesehen, so ist es zweckmäßig, wenn die zumindest eine Blendenvorrichtung auf der der Austritts-Optik zugewandten Grenzfläche der Eintrittsoptik angeordnet ist.

Es kann in diesem Fall aber auch vorgesehen sein, dass die zumindest eine Blendenvorrichtung als von der Eintritts-Optik und der Austritts-Optik getrennt ausgebildetes Bauteil ausgebildet ist.

Eine einstückige Ausgestaltung hat den Vorteil, dass nach der Fertigung, die exakt erfolgen muss, ein einziger, stabiler Bauteil vorhanden ist, der problemlos verbaut werden kann.

Im Falle einer zumindest zweistückigen Ausgestaltung, bei der Eintritts- und Austritts-Optik voneinander getrennt sind, ist ein Positionieraufwand der einzelnen Bauteile beim Zusammenbau notwendig, von Vorteil bei dieser Ausgestaltungsform ist allerdings, dass die einzelnen Bauteile - wie weiter unten noch erläutert - relativ zueinander bewegt werden können.

Insbesondere von Vorteil ist die Erfindung, wenn die zumindest eine Lichtquelle zumindest eine Halbleiterlichtquelle, z.B. zumindest eine Leuchtdiode und/oder zumindest eine Laserdiode umfasst. Die eigentliche Lichtquelle kann in letzterem Fall, d.h. im Fall der Verwendung von zumindest einer Laserdiode ein Leuchtelement sein oder ein oder mehrere Leuchtelemente umfassen (Leuchtelement z.B. in Form eines sogenannten "Phosphors", einer Optokeramik, etc.), welche(s) von einem Laser, d.h. einer Laserdiode angestrahlt und zur Emission von Licht angeregt wird.

Für IR Licht wird eine entsprechende IR-Diode verwendet.

Weiters ist es von Vorteil, wenn zwischen der zumindest einen Lichtquelle und der zumindest einen Projektionseinrichtung zumindest eine Vorsatzoptikeinrichtung angeordnet ist, in welche zumindest eine Vorsatzoptikeinrichtung die zumindest eine Lichtquelle das von ihr emittierte Licht einstrahlt, und welche Vorsatzoptikeinrichtung derart ausgebildet ist, dass das aus ihr austretende Licht im Wesentlichen parallel gerichtet ist.

Vorzugsweise ist die Vorsatzoptikeinrichtung als Kollimator ausgebildet.

Auf diese Weise kann die aus der oder den Lichtquellen, insbesondere LED-Lichtquelle(n) austretende Licht optimal ausgenutzt werden.

Bei einer vorteilhaften Ausführungsform ist, wie weiter oben schon kurz angesprochen, mit Vorteil vorgesehen, dass die Austrittsoptik in Bezug auf die Eintrittsoptik verschiebbar gelagert ist.

Insbesondere von Vorteil ist es, wenn die Austrittsoptik- in Einbaulage des Lichtmoduls- in vertikaler und/oder horizontaler Richtung verschiebbar ist.

Auf diese Weise lässt sich das Lichtbild in vertikaler und/oder horizontaler Richtung, z.B. zur Leuchtweitenregulierung und/oder zur Realisierung einer dynamischen Kurvenlichtfunktion verschieben.

In optischer Hinsicht zweckmäßig ist es dabei, wenn die Austrittsoptik parallel zu der Eintrittsoptik, und/oder parallel zu einer gegebenenfalls vorhandenen Blendenvorrichtung verschiebbar ist.

Vorzugsweise ist zum Verschieben der Austrittsoptik in jeweils einer Richtung jeweils ein Aktuator vorgesehen.

Bei einer konkreten Ausführungsform ist vorgesehen, dass der zumindest eine Aktuator ein Piezoaktuator ist.

Von besonderem Vorteil ist es, wenn - wie weiter oben schon erläutert - die Leuchtdioden und/oder Laserdioden einer Lichtquelle unabhängig voneinander ansteuerbar sind.

Unter "ansteuerbar" ist hier in erster Linie das Ein- und Ausschalten zu verstehen. Zusätzlich kann darunter auch das Dimmen der Leuchtdioden und/oder Laserdioden der Lichtquellen verstanden werden.

Außerdem ist es von Vorteil, wenn bei zwei oder mehr Lichtquellen für das Lichtmodul die Lichtquellen unabhängig voneinander ansteuerbar sind. Unter "unabhängig voneinander" ist dabei zu verstehen, dass tatsächlich alle Lichtquellen unabhängig voneinander angesteuert werden können, oder dass die Lichtquellen gruppenweise unabhängig voneinander angesteuert werden können.

Bei einer Ausführungsform der Erfindung ist vorgesehen, dass jedem Mikro-System bestehend aus einer Mikro-Eintrittsoptik und einer Mikro-Austrittsoptik genau eine Lichtquelle, welche vorzugsweise genau eine Leuchtdiode oder genau eine Laserdiode umfasst, zugeordnet ist.

Es kann aber auch vorgesehen sein, dass eine oder mehrere Lichtquellen zum Einsatz kommen, welche in eine Projektionseinrichtung - bestehend aus mehreren solchen Mikro-Systemen - Licht einstrahlen; durch ein (oder mehrere) entsprechende Vorsatzoptiken 4 wird das Licht dabei so durchmischt bzw. aufgeweitet, dass eine Lichtquelle Licht auf mehrere Mikro-Systeme, in der Regel (bei einer Vorsatzoptik) auf alle Mikro-Systeme einer Projektionseinrichtung abstrahlt.

Nicht ausschließlich nur, aber insbesondere bei der Verwendung von Laser-Lichtquellen hat es sich auch noch als günstig herausgestellt, zwei oder mehr Lichtquellen-Gruppen vorzusehen, wobei jede Lichtquellen-Gruppen zumindest eine Lichtquelle umfasst, und wobei Lichtquellen einer Lichtquellen-Gruppen Licht derselben Farbe bzw. Wellenlänge emittieren, und wobei Lichtquellen unterschiedlicher Lichtquellen-Gruppen Licht unterschiedlicher Farbe emittieren, und wobei jede Lichtquellen-Gruppen einen eigens dieser Lichtquellen-Gruppen zugeordneten Bereich der zumindest einen Projektionseinrichtung beleuchten, und wobei die unterschiedlichen Bereiche identisch ausgebildet bzw. zur Erzeugung identischer Lichtverteilungen ausgebildet sind.

Die unterschiedlichen Bereiche können in einer Projektionseinrichtung ausgebildet sein oder auf zwei oder mehrere Projektionseinrichtungen aufgeteilt sein.

Zur Erzeugung von weißem Licht ist es günstig, wenn drei Lichtquellen-Gruppen vorgesehen sind, wobei vorzugsweise eine Lichtquellen-Gruppen rotes Licht, eine Lichtquellen-Gruppen grünes Licht und eine Lichtquellen-Gruppen blaues Licht emittiert.

Die eingangs gestellten Aufgaben werden weiters mit einer Beleuchtungsvorrichtung für einen Fahrzeugscheinwerfer gelöst, welche eine Anzahl an Mikroprojektions-Lichtmodulen wie oben beschrieben umfasst.

Dabei kann mit Vorteil vorgesehen sein, dass für die Beleuchtungsvorrichtung zwei oder mehr Gruppen von Lichtmodulen vorgesehen sind, wobei jede Gruppe zumindest ein, zwei oder mehrere Lichtmodule umfasst, wobei Lichtmodule einer Gruppe dieselbe Lichtverteilung erzeugen, und wobei Lichtmodule aus unterschiedlichen Gruppen unterschiedliche Lichtverteilungen erzeugen.

Weiters von Vorteil kann es in diesem Zusammenhang sein, wenn die Lichtquellen jeder Gruppe von Lichtmodulen unabhängig von den Lichtquellen der anderen Gruppen ansteuerbar sind.

Weiters kann vorgesehen sein, dass die Projektionseinrichtungen von Lichtmodulen einer Gruppe ein gemeinsames Bauteil bilden.

Bei einer alternativen Ausgestaltung ist vorgesehen, dass die Projektionseinrichtungen aller Lichtmodule ein gemeinsames Bauteil bilden.

Beispielsweise ist bei einer erfindungsgemäßen Beleuchtungsvorrichtung vorgesehen, dass das oder die gemeinsamen Bauteile in Form einer Folie ausgebildet ist/sind.

Insbesondere günstig ist es, wenn bei einer solchen Beleuchtungsvorrichtung zwei oder mehr Gruppen zur Erzeugung unterschiedlicher Lichtverteilung vorgesehen sind, wobei jede Gruppen eine unterschiedliche Lichtverteilung bildet, die beispielsweise aus einer der folgenden Lichtverteilungen gewählt ist:
*) Abbiegelicht-Lichtverteilung;
*) Stadtlicht-Lichtverteilung;
*) Landstraßenlicht-Lichtverteilung;
*) Autobahnlicht-Lichtverteilung;
*) Lichtverteilung für Zusatzlicht für Autobahnlicht;
*) Kurvenlicht-Lichtverteilung;
*) Abblendlicht-Lichtverteilung;
*) Abblendlicht-Vorfeld-Lichtverteilung;
*) Lichtverteilung für asymmetrisches Abblendlicht im Fernfeld;
*) Lichtverteilung für asymmetrisches Abblendlicht im Fernfeld im Kurvenlichtmodus;
*) Fernlicht-Lichtverteilung;
*) Blendfreies Fernlicht-Lichtverteilung.

Nicht ausschließlich nur, aber insbesondere bei der Verwendung von Laser-Lichtquellen hat es sich auch noch als günstig herausgestellt, wenn die Beleuchtungsvorrichtung zwei oder mehr Lichtmodule umfasst, wobei jedes Lichtmodul zumindest eine Lichtquellen-Gruppe aufweist, wobei jede Lichtquellen-Gruppe zumindest eine Lichtquelle umfasst, und wobei Lichtquellen einer Lichtquellen-Gruppe Licht derselben Farbe emittieren, und wobei zumindest zwei Lichtquellen-Gruppen vorgesehen sind, welche Licht unterschiedlicher Farbe emittieren, und wobei jede Lichtquellen-Gruppe einen eigens dieser Lichtquellen-Gruppen zugeordneten Bereich der zumindest einen Projektionseinrichtung ihres Lichtmoduls beleuchten, und wobei die unterschiedlichen Bereiche identisch ausgebildet bzw. zur Erzeugung identischer Lichtverteilungen ausgebildet sind.

Von besonderem Vorteil ist es, wenn drei Gruppen von Lichtquellen-Gruppen vorgesehen sind, wobei vorzugsweise eine Gruppe der Lichtquellen-Gruppen rotes Licht, eine Gruppe von Lichtquellen-Gruppen grünes Licht und eine Gruppe von Lichtquellen-Gruppen blaues Licht emittiert, und wobei jede Gruppe von Lichtquellen-Gruppen zumindest eine Lichtquellen-Gruppe umfasst.

Die Beleuchtungsvorrichtung kann Bestandteil eines Scheinwerfers sein, also mit einem oder mehreren Lichtmodulen anderer Bauart zu einem Scheinwerfer kombiniert werden, oder der Fahrzeugscheinwerfer ist durch die Beleuchtungseinrichtung gebildet.

Im Folgenden ist die Erfindung an Hand der Zeichnung näher erörtert. In dieser zeigt
Fig. 1 eine schematische Darstellung eines Mikroprojektions-Lichtmoduls in einer Explosionsdarstellung,
Fig. 2 eine schematische Darstellung eines weiteren Mikroprojektions-Lichtmoduls in einer Explosionsdarstellung,
Fig. 2a eine schematische Darstellung einer Mikro-Optik-Systems eines Mikroprojektions-Lichtmoduls in einer perspektivischen Ansicht sowie eine vertikale Schnittebene,
Fig. 2b einen Schnitt durch das Mikro-Optik-System aus Figur 2a entlang der Ebene A-A,
Fig. 2c noch einmal die Darstellung aus Figur 2a, mit einer horizontalen Schnittebene,
Fig. 2d einen Schnitt durch das Mikro-Optik-System aus Figur 2c entlang der Ebene B-B,
Fig. 3 eine schematische Darstellung einer Blendenvorrichtung mit einer Anzahl an Blenden,
Fig. 3a eine schematische Darstellung einer Gesamtlichtverteilung, erzeugt mit einem Lichtmodul mit einer Blendenvorrichtung aus Figur 3,
Fig. 3b die Teillichtverteilungen, erzeugt mit den einzelnen Blenden der Blendenvorrichtung aus Figur 3, welche gemeinsam die Gesamtlichtverteilung aus Figur 3a bilden,
Fig. 4a einen schematischen Ausschnitt aus einer Projektionseinrichtung eines Lichtmoduls in einteiliger Ausführung,
Fig. 4b einen schematischen Ausschnitt aus einer Projektionseinrichtung eines Lichtmoduls in zweiteiliger Ausführung,
Fig. 4c einen schematischen Ausschnitt aus einer Projektionseinrichtung eines Lichtmoduls in dreiteiliger Ausführung,
Fig. 5 ein Mikroprojektions-Lichtmodul wie in Figur 1 dargestellt, mit einem Aktuator zum Verschieben der Austrittsoptik in vertikaler Richtung,
Fig. 6 ein Mikroprojektions-Lichtmodul wie in Figur 1 dargestellt, mit einem Aktuator zum Verschieben der Austrittsoptik in horizontaler Richtung,
Fig. 7 ein Mikroprojektions-Lichtmodul wie in Figur 1 dargestellt, mit einem Aktuator zum Verschieben der Austrittsoptik in vertikaler Richtung und einem Aktuator zum Verschieben der Austrittsoptik in horizontaler Richtung,
Fig. 8a eine schematische Lichtverteilung,
Fig. 8b die Auswirkungen eines Verschiebens der Austrittsoptik vertikal nach unten auf die Lichtverteilung aus Fig. 8a,
Fig. 8c die Auswirkungen eines Verschiebens der Austrittsoptik vertikal nach oben auf die Lichtverteilung aus Fig. 8a,
Fig. 9a eine Teillichtverteilung, erzeugt mit einem Lichtmodul oder einer oder mehreren Mikro-Optik-Systemen eines solchen Lichtmoduls,
Fig. 9b die Auswirkungen eines Verschiebens der Austrittsoptik horizontal nach links auf die Teillichtverteilung aus Fig. 9a,
Fig. 9c die Auswirkungen eines noch weiteren Verschiebens der Austrittsoptik horizontal nach links auf die Teillichtverteilung aus Fig. 9a,
Fig. 10 eine schematische Darstellung einer Beleuchtungsvorrichtung, aufgebaut aus einer Anzahl an Mikroprojektions-Lichtmodul,
Fig. 11a - 11c unterschiedliche Varianten von Mikro-Optik-Systemen, und
Fig. 12 eine schematische Anordnung zur Erzeugung einer weißen Gesamtlichtverteilung unter Verwendung von Lichtquellen unterschiedlicher Farben.

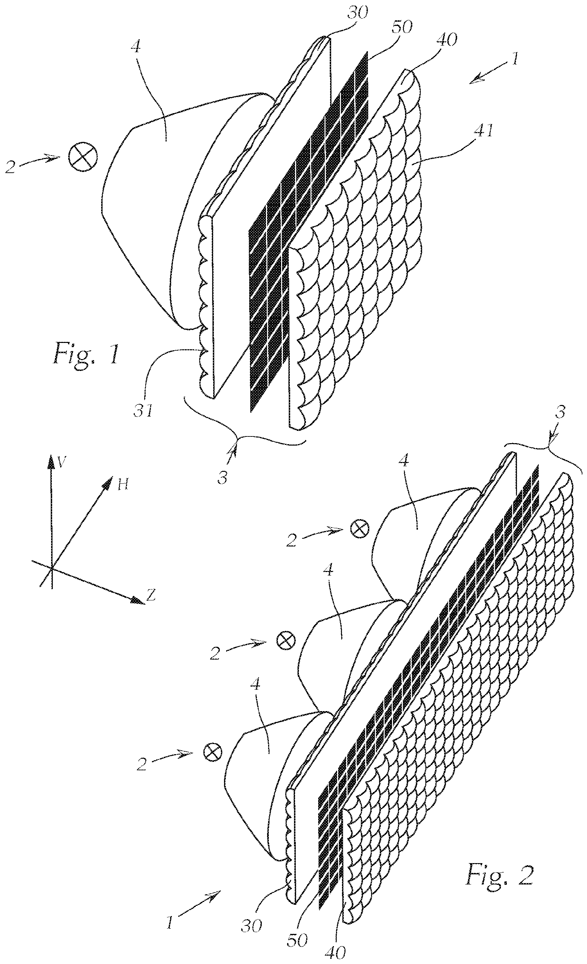

Figur 1 zeigt schematisch ein Mikroprojektions-Lichtmodul 1 für einen erfindungsgemäßen Kraftfahrzeugscheinwerfer. Das Mikroprojektions-Lichtmodul 1 eine Lichtquelle 2 sowie eine Projektionseinrichtung 3, welche das von der Lichtquelle 2 austretende Licht in einen Bereich vor dem Kraftfahrzeug in Form von zumindest einer Lichtverteilung abbildet. Die dargestellten Koordinaten bezeichnen die Lichtaustrittsrichtung Z, die horizontale Richtung (H), welche normal auf Z und normal auf die vertikale Richtung V steht.

Bei der Lichtquelle 2 handelt es sich vorzugsweise um eine Halbleiterlichtquellen, beispielsweise um eine LED-Lichtquelle, welche eine oder mehrere LEDs aufweist. Die Lichtquelle kann auch aus einer oder mehreren Laserdioden bestehen.

Die Lichtquelle 2 strahlt ihr Licht in eine Vorsatzoptik 4, beispielsweise einen Kollimator ein, welche das Licht der Lichtquelle 2 im Wesentlichen parallel richtet, bevor es auf die Projektionseinrichtung 3 auftrifft.

Diese Projektionseinrichtung 3 umfasst, wie in Figur 1 dargestellt, eine Eintrittsoptik 30, welche aus einem Array an Mikro-Eintrittsoptiken 31 besteht, sowie eine Austrittsoptik 40, welche aus einem Array an Mikro-Austrittsoptiken 41 besteht, wobei jeder Mikro-Eintrittsoptik 31 genau eine Mikro-Austrittsoptik 41 zugeordnet ist.

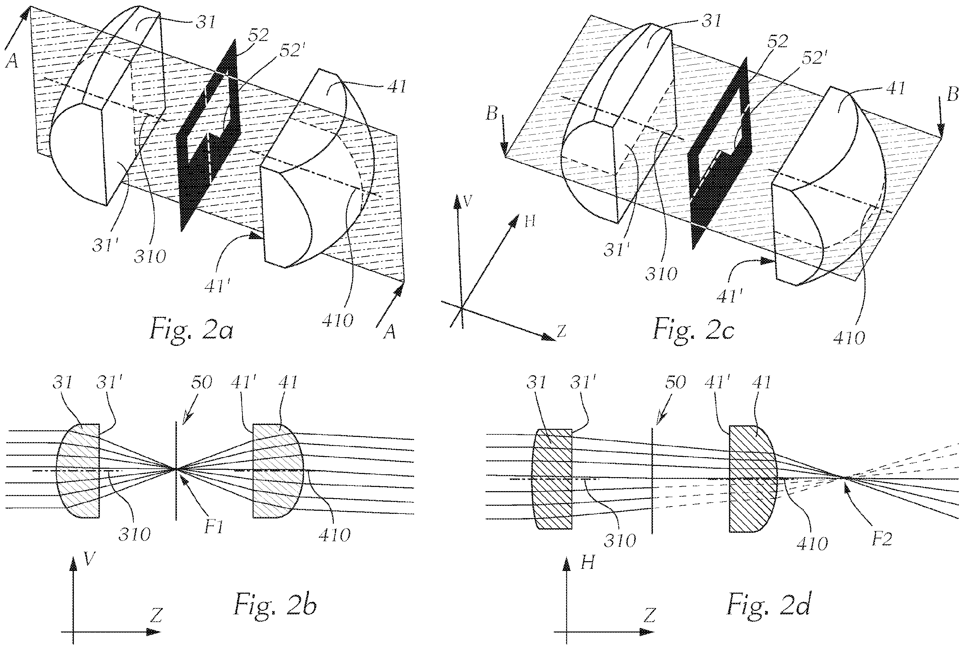

Figur 2 zeigt eine Variante eines Mikroprojektions-Lichtmoduls 1, bei dem drei Lichtquellen 2 jeweils über eine zugeordnete Vorsatzoptik 4, welche das Licht parallel richtet, Licht in eine gemeinsame Projektionseinrichtung 3, die einen vergleichbaren Aufbau wie in Figur 1 gezeigt aufweist, einstrahlen.

Figur 2 soll veranschaulichen, dass hier im Grunde beliebige Anordnungen denkbar sind, bei denen bestimmte Lichtquellen jeweils nur definierte Bereiche der Projektionseinrichtung beleuchten 3. Dies kann entweder dazu dienen, dass eine ausreichende Beleuchtungsstärke erzielt werden kann, es kann aber auch vorgesehen sein, dass - an dem Beispiel von Figur 2 erörtert - die Bereiche der Projektionseinrichtung 3 je nach zugeordneter Lichtquelle unterschiedliche ausgebildet sind. Es können dann z.B. drei verschiedene Lichtverteilungen mit den drei Lichtquellen erzeugt werden, die zusammen aktiviert eine bestimmte Gesamtlichtverteilung bilden können.

Die Mikro-Eintrittsoptiken 31 bei einem Lichtmodul gemäß Figur 1 oder 2 sind dabei derart ausgebildet und/oder sind die Mikro-Eintrittsoptiken 31 und die Mikro-Austrittsoptiken 41 derart zueinander angeordnet, dass das aus einer Mikro-Eintrittsoptik 31 austretende Licht genau nur in die zugeordnete Mikro-Austrittsoptik 41 eintritt, und wobei das von den Mikro-Eintrittsoptiken 31 vorgeformte Licht von den Mikro-Austrittsoptiken 41 in einen Bereich vor dem Kraftfahrzeug als zumindest eine Lichtverteilung LV1 - LV5; GLV abgebildet wird.

Weiters ist, wie dies den Figuren generell zu entnehmen ist, eine Blendenvorrichtung 50 zwischen der Eintrittsoptik 30 und der Austrittsoptik 40 angeordnet. Mit einer solchen Blendenvorrichtung kann, wie dies weiter unten noch eingehender erörtert wird, der durch die Projektionseinrichtung durchtretende Lichtstrom beschnitten werden, um eine oder mehrere Lichtverteilungen mit definierten Formen, beispielsweise mit einer oder mehreren Hell-Dunkel-Grenzen, erzeugen zu können.

Der Vollständigkeit halber sei hier noch angemerkt, dass die Darstellung in den Figuren 1 und 2 mit im Wesentlichen dunkler Blendenvorrichtung 50 über die Ausgestaltung der Blendenvorrichtung 50 keine Aussagen trifft. Die Darstellung ist rein schematisch und soll lediglich das Vorhandensein einer Blendenvorrichtung 50 und ihre ungefähre Position zeigen.

Eine Blendenvorrichtung ist auch nicht zwingend notwendig, d.h., die vorliegende Erfindung lässt sich sinnvoll auch ohne Blendenvorrichtung realisieren. In diesem Fall findet kein Beschnitt des Lichtstromes statt, das Lichtbild wird von Eintritts- und Austrittsoptik erzeugt. Eine Blendenvorrichtung liefert den Vorteil, dass ein gezielter Beschnitt der Lichtverteilung auf einfache Weise realisiert werden kann.

Die Eintrittsoptik 30 ist ein einziger Bauteil, welcher von den Mikro-Eintrittsoptiken 31 gebildet ist. Die Mikro-Eintrittsoptiken 31 liegen dabei unmittelbar, vorzugsweise ohne Abstand aneinander an und bilden einen Array wie oben erwähnt und in den Figuren 1 und 2 gezeigt.

Ebenso gilt, dass die Austrittsoptik 40 ein einziger Bauteil ist, welcher von den Mikro-Austrittsoptiken 41 gebildet ist. Die Mikro-Austrittsoptiken 41 liegen dabei unmittelbar, vorzugsweise ohne Abstand aneinander an und bilden einen Array wie oben erwähnt und in den Figuren 1 und 2 gezeigt.

Außerdem können, wie dies weiter unten noch erläutert wird, die Eintrittsoptik und die Austrittsoptik, gegebenenfalls gemeinsam mit der Blendenvorrichtung einstückig ausgebildet sein.

Figuren 2a und 2c zeigen ein Mikro-Optik-System bestehend aus einer Mikro-Eintrittsoptik 31 und einer zugeordneten Mikro-Austrittsoptik 41, die wie oben beschrieben derart ausgebildet und/oder angeordnet sind, dass Licht aus der gezeigten Mikro-Eintrittsoptik 31 ausschließlich in die zugeordnete Mikro-Austrittsoptik 41 gelangt. Weiters zeigt Figur 2a einen Teil einer optionalen Blendenvorrichtung im Bereich zwischen den beiden Mikro-Optiken 31, 41.

Betrachtet man das Mikro-Optik-System aus den Figuren 2a und 2c, so erkennt man in Figur 2b, dass die Mikro-Eintrittsoptik 31 das durch sie durchtretende Licht in vertikaler Richtung in einen Mikro-Eintrittsoptik-Brennpunkt F1 fokussiert. Figur 2b zeigt also Lichtstrahlen, welche in einer vertikalen Ebene (nämlich der Ebene A-A aus Figur 2a) liegen bzw. die Projektion von Lichtstrahlen in diese Ebene A-A.

Die aus der (hier nicht gezeigten) Vorsatzoptik parallel austretenden Lichtstrahlen werden also von der Mikro-Eintrittsoptik 31 in den Mikro-Eintrittsoptik-Brennpunkt F1 fokussiert, welcher in Lichtaustrittsrichtung gesehen vor der zugeordneten Mikro-Austrittsoptik 41 liegt.

Wie dies eingangs schon erwähnt wurde, soll hier der Vollständigkeit halber nochmals angemerkt werden, dass der einfacheren Formulierung hier und generell im Rahmen dieser gesamten Offenbarung an anderen Stellen von einer Fokussierung "in einen Brennpunkt" gesprochen wird. Tatsächlich, d.h. in der Realität werden dabei allerdings die Lichtstrahlen nicht in einem einzelnen Brennpunkt fokussiert sondern werden in eine Brennfläche abgebildet, welche den besagten Brennpunkt enthält. Diese Brennfläche kann eine Brennebene sein, in der Regel ist diese Brennfläche aber in Folge von Abbildungsfehlern nicht eben sondern kann auch gekrümmt "ausgebildet" sein, d.h. die Lichtstrahlen werden in eine gekrümmte Fläche, welche den Brennpunkt enthält, abgebildet.

Jede Mikro-Eintrittsoptik verfügt somit über einen Brennpunkt F1, welcher zwischen Eintrittsoptik und Austrittsoptik liegt, und in welchen Licht der zugehörigen Mikro-Eintrittsoptik fokussiert wird.

Weiters weist die Mikro-Austrittsoptik 41 einen mit dem der zugeordneten Mikro-Eintrittsoptik 31 zusammenfallenden Brennpunkt auf. Licht wird also in den Brennpunkt F1 fokussiert und anschließend beim Durchtritt durch die zugehörige Mikro-Austrittsoptik 41 entsprechend in der vertikalen Richtung kollimiert und in einen Bereich vor dem Fahrzeug projiziert, wie dies in Figur 2b schematisch dargestellt ist.

Figur 2d zeigt weiters das Verhalten in horizontaler Richtung, d.h. es werden Strahlen betrachtet, die in einer horizontalen Ebene, etwa in der Ebene B-B aus Figur 2c liegen bzw. die Projektion von Strahlen in diese Ebene. Wie in Figur 2d zu erkennen ist, weitet jedes Mikro-Optik-System bestehend aus Mikro-Eintrittsoptik 31 und Mikro-Austrittsoptik 41 das durch sie durchtretende Licht in horizontaler Richtung auf. Dazu fokussiert jede Mikro-Eintrittsoptik 31 das durch sie durchtretende Licht in horizontaler Richtung auf einen Brennpunkt, welcher hinter der Mikro-Austrittsoptik 41 liegt. Dieses Licht tritt vorher aber durch die Mikro-Austrittsoptik 41 durch und wird von dieser in horizontaler Richtung in einen Brennpunkt F2 fokussiert, welcher hinter der Mikro-Austrittsoptik 41 liegt. In horizontaler Richtung wird das Licht also verstreut, um die gewünschte Breite der Teillichtverteilungen der einzelnen Mikro-Optik-Systeme zu erreichen.

Es sei an dieser Stelle noch einmal vermerkt, dass hier ein idealisiertes optisches System beschrieben ist; in der Praxis werden häufig sowohl erste als auch zweite Optik eines Mikro-Optik-Systems als Freiform ausgeführt, wodurch sich eine Abbildung wie oben beschrieben in eine Brennfläche ergibt.

Generell gilt, dass die obige Darstellung eine beispielhafte, konkrete Ausführungsform zeigt. Wesentliches Merkmal, unabhängig von einem Brennpunkt F2 ist jenes, dass in der Horizontalen das durch die Mikro-Optik-Systeme durchtretende Licht aufgeweitet wird.

Die Mikro-Eintrittsoptiken 31 sind entsprechend vorzugsweise als Sammeloptiken ausgebildet, welche Licht in vertikaler und horizontaler Richtung sammeln. Dabei können die Mikro-Eintrittsoptiken 31 z.B. als Freiform-Optiken ausgebildet sein.

Die Mikro-Austrittsoptiken 41 sind üblicherweise als Projektionsoptiken ausgebildet, z.B. als sphärische oder asphärische Linsen. Es kann auch vorgesehen sein, dass die Mikro-Austrittsoptiken 41 als Freiform-Linsen ausgebildet sind.

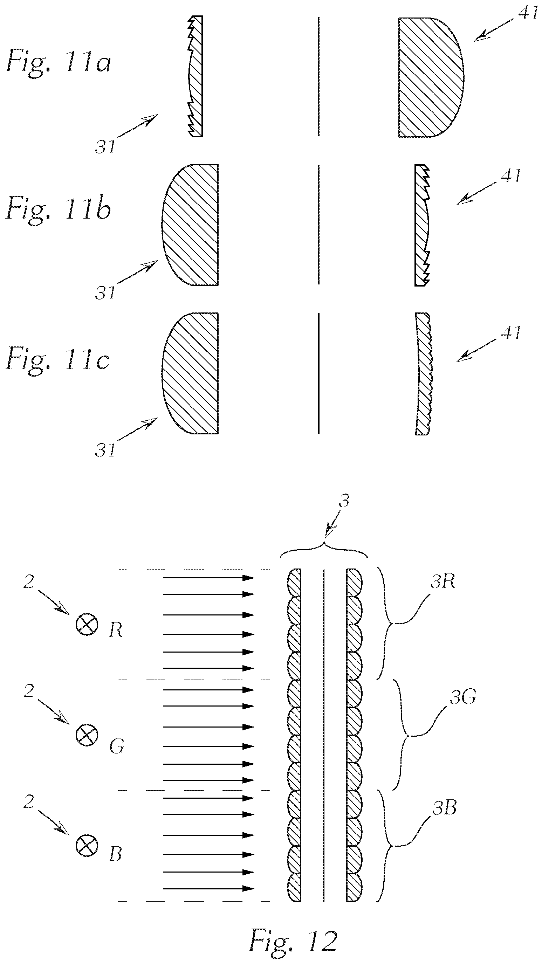

An dieser Stelle soll dabei kurz auf die Figuren 11a - 11c verwiesen werden: oben und in der weiteren Beschreibung wird davon ausgegangen, dass jede Mikro-Eintritts-Optik 31 und jede Mikro-Austrittsoptik 41 jeweils aus einer einzigen Linse gebildet sind. Es kann aber auch vorgesehen sein, dass entweder die Mikro-Eintritts-Optiken 31 und/oder die Mikro-Austritts-Optiken 41 selbst noch einmal jeweils aus einer Anzahl von "Optiken" bzw. optischen Elementen bestehen. Jedes dieser "Mikro-Mikro-Optikelemente" einer Mikro-Optik muss dazu dieselbe Brennebene aufweisen. Beispielsweise kann eine oder können beide Mikro-Optiken Fresnel-Linsen sein, welche unterschiedliche optische Bereiche aufweisen. Jeder der optischen Bereich (Mikro-Mikro-Optik) einer Mikro-Eintritts-Optik kann, muss aber nicht in jede Mikro-Mikro-Austritts-Optik Licht abstrahlen.

Figur 11a zeigt ein Beispiel, in welchem in einem Mikro-Optik-System die Mikro-Eintritts-Optik und die Mikro-Austritts-Optik als Fresnel-Linsen ausgebildet sind.

Figur 11b zeigt ein Beispiel, bei welchem die Mikro-Eintritts-Optik als "herkömmliche" Linse und die Mikro-Austritts-Optik als Fresnel-Linse ausgebildet ist.

Figur 11c Figur 11b zeigt ein Beispiel, bei welchem die Mikro-Eintritts-Optik als "herkömmliche" Linse und die Mikro-Austritts-Optik als Array von Mikro-Mikro-Linsen ausgebildet ist.

Die Figuren 11a - 11c zeigen lediglich einige denkbare Varianten, Kombinationen oder andere Unterteilungen der Mikro-Optiken.

Weiters, wie Figuren 2a bzw. 2c zu entnehmen ist, sind die einander zugewandten Grenzflächen 31', 41' von einander zugeordneten Mikro-Eintrittsoptiken 31 und Mikro-Austrittsoptiken 41 kongruent zueinander ausgebildet und vorzugsweise auch kongruent zueinander angeordnet.

"Kongruent ausgebildet" bedeutet dabei nichts anderes, als dass die Grenzflächen von einander zugeordneten Mikro-Optiken dieselbe Form der Grundfläche aufweisen, mit im Prinzip beliebiger räumlicher Anordnung. "Kongruent" angeordnet bedeutet, dass diese Grundflächen zusätzlich auch noch so angeordnet sind, dass sie entweder unmittelbar deckungsgleich zusammenfallen oder zwar beabstandet sind, bei einem Verschieben normal zu einer der Grundflächen aber deckungsgleich ineinander übergehen würden.

Außerdem ist es zweckmäßig, wenn die Grenzflächen 31', 41' plan ausgebildet sind.

In dem gezeigten Beispiel sind die Flächen 31', 41' quadratisch ausgebildet, anderen Formen sind rechteckig oder hexagonal.

Die optischen Achsen 310, 410 (Figuren 2b, 2d) von einander zugeordneten Mikro-Eintrittsoptiken 31 und Mikro-Austrittsoptiken 41 verlaufen günstiger Weise parallel zueinander, wobei es insbesondere von Vorteil ist, wenn die optischen Achsen 310, 410 zusammenfallen.

Die Blendenvorrichtung 50 liegt in einer Ebene, welche von den Mikro-Austrittsoptik-Brennpunkten F1 aufgespannt ist. Vorzugsweise weist dabei die Blendenvorrichtung 50 für jedes Mikro-Optik-System (siehe Figur 2a, 2c) jeweils eine Blende auf, wobei die Blende eine oder mehrere optisch wirksame Blendenkanten aufweist.

Die Figuren 2a, 2c zeigen dabei ein Mikro-Optik-System, welchem eine Blende 52 mit einer optisch wirksamen Blendenkante 52' zugeordnet ist. Das durch dieses System durchtretende Licht wird entsprechend beschnitten und die Blendenkante 52' wird im Lichtbild als Hell-Dunkel-Grenze abgebildet.

Wenn eine Blendenvorrichtung 50 vorgesehen ist, so weist diese für zumindest ein Paar von einander zugeordneten Mikro-Eintritts- und Mikro-Austrittsoptiken 31, 41 eine Blende auf. Vorzugsweise weist die Blendenvorrichtung 50 allerdings für mehrere Paare, und insbesondere für alle Paare eine Blende 51, 52, 53, 54, 55 mit jeweils zumindest einer, beispielsweise genau einer optisch wirksamen Blendenkante 51', 52', 53', 54', 55' auf.

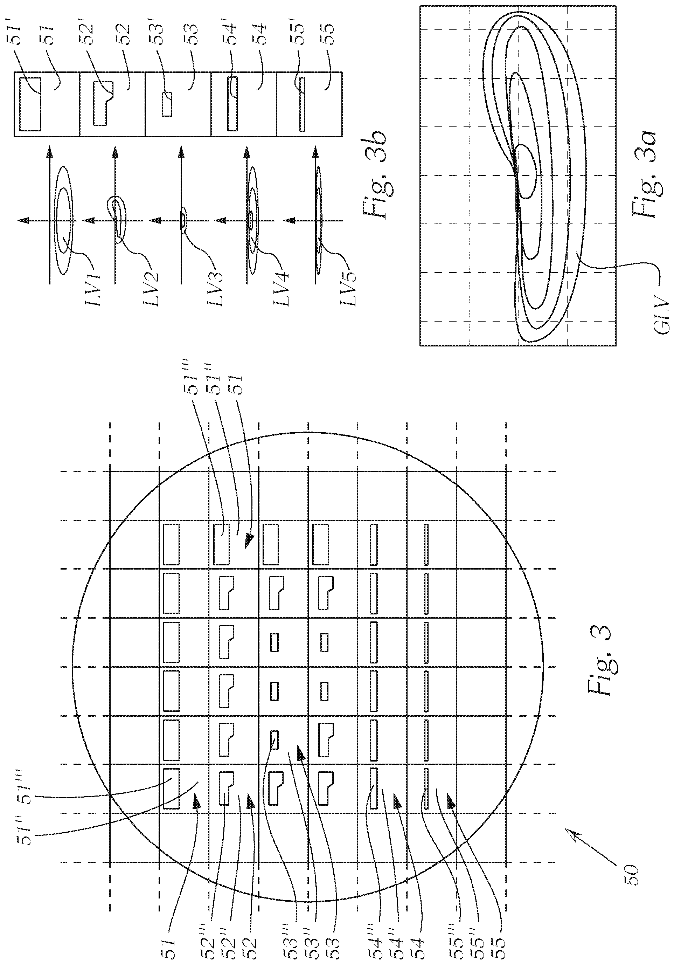

Letztere Situation ist in Figur 3 schematisch dargestellt. Figur 3 zeigt einen Blendenvorrichtung 50 in einer Ansicht von Vorne, wobei die Blendenvorrichtung 50 fünf unterschiedliche Typen von Blenden 51 - 55 aufweist. Jede dieser Blenden 51 - 55 besteht aus einem Licht undurchlässigen Material 51" - 55", welches genau eine (wie dargestellt) oder mehrere (nicht dargestellt) lichtdurchlässige Durchbrüche 51"' - 55"' aufweist, durch welche Licht durchtreten kann. Durch die Durchbrüche wird das Lichtbild entsprechend beschnitten, die Blendenkante 51', 52', 53', 54', 55' der Blenden werden im jeweiligen Teil-Lichtbild als oben liegende Hell-Dunkel-Grenzen, welche das Lichtbild nach oben hin begrenzt, abgebildet.

Jede dieser Blenden ist genau einem Mikro-Optik-System zugeordnet, und wenn alle Mikro-Optik-Systeme mit Licht bestrahlt werden, ergibt sich eine Gesamtlichtverteilung GLV wie in Figur 3a schematisch dargestellt als Überlagerung aller Teil-Lichtverteilungen. Bei der gezeigten Gesamtlichtverteilung GLV handelt es sich in dem gezeigten Beispiel um eine Abblendlichtverteilung mit asymmetrischer Hell-Dunkel-Grenze.

Figur 3b zeigt jeweils eine der Blenden 51 - 55 und links neben der Blende schematisch die jeweils damit erzeugte Teil-Lichtverteilung LV1 - LV5.

Auf diese Weise kann z.B. eine Abblendlichtverteilung mit einem erfindungsgemäßen Lichtmodul erzeugt werden, wobei zu der Abblendlichtverteilung einzelne Mikro-Optik-Systeme jeweils einen definierten Beitrag in Form einer Teil-Lichtverteilung erzeugen.

Auf diese Weise lassen sich beliebige Gesamtlichtverteilungen erzeugen, und durch gruppenweises Anleuchten von Mikro-Optik-Systemen mit identischer Blende mit jeweils zumindest einer eigenen Lichtquelle können gezielt nur bestimmte Teil-Lichtverteilungen aktiviert (oder ausgeblendet) werden, sodass sich z.B. eine dynamische Lichtverteilung erzeugen lässt.

Die Gestaltung der Eintrittsoptik(en) und der Austrittsoptik(en) lässt unter Umständen nur eine begrenzte Formung der Lichtverteilung zu. Durch die Verwendung von vorzugsweise standardisierten Blenden wie oben beschrieben lassen sich eine Anzahl an Teillichtverteilungen erzeugen, welche bei entsprechender Auswahl zu der gewünschten Gesamtlichtverteilung führen.

Die Blenden können z.B. auch als einzelne Blenden ausgeführt sein, welche die Blendenvorrichtung "bilden", vorzugsweise handelt es sich aber wie gezeigt um einen Blendenvorrichtungs-Bauteil, etwa eine ebene Folie etc., in welche entsprechende Öffnungen/Durchbrüche zum Durchtritt von Licht vorgesehen sind.

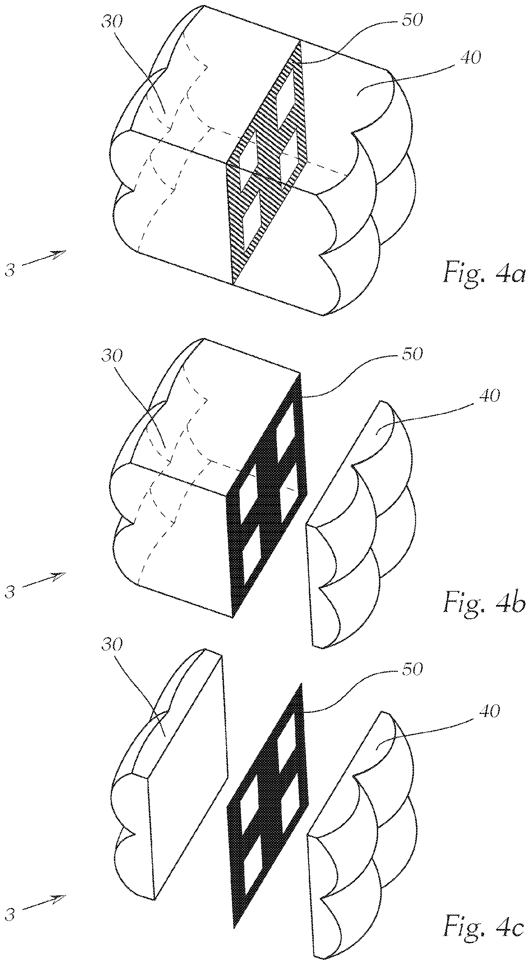

Wie weiter oben schon kurz angesprochen, kann vorgesehen sein, dass bei einer ersten Ausgestaltung der Erfindung wie in Figur 4a gezeigt vorgesehen, dass die Projektionseinrichtung 3 bestehend aus Eintrittsoptik 30 und Austrittsoptik 40, und, wie gezeigt gegebenenfalls aus einer Blendeneinrichtung 50, einteilig ausgebildet ist. Bei dem Optikkörper handelt es sich beispielsweise um eine Kunststoff-Optik, welche zur Realisierung einer Blendenvorrichtung im Bereich, in welchem die Blendenvorrichtung vorgesehen ist, gezielt verkohlt wurde. Eine solche Verkohlung kann etwa durch Laserstrahlen oder Elektronenstrahlen etc. erfolgen.

Bei einer zweiten Variante, die in Figur 4b gezeigt ist, ist vorgesehen, dass die Projektionseinrichtung 3 aus zwei getrennten Bauteilen, einer Eintrittsoptik 30 und einer Austrittsoptik 40 gebildet ist, die typischer Weise auch in einem Abstand zueinander angeordnet sind.

Ist bei einer solche Ausführungsform weiters noch eine Blendenvorrichtung 50 vorgesehen, so ist es zweckmäßig, wenn die Blendenvorrichtung 50 auf der der Austritts-Optik 40 zugewandten Grenzfläche 31' der Eintrittsoptik 30 angeordnet ist.

Die Blendenvorrichtung kann dabei durch Bedampfen der Grenzfläche 31' erzeugt werden, oder durch Aufbringen einer absorbierenden Schicht, welche anschließend gezielt z.B. mittels Laserstrahlen wieder abgetragen wird. Es ist auch denkbar, auf eine derart mit einer Blendenvorrichtung versehene Eintritts-Optik eine Austritts-Optik mittels z.B. ZweiKomponenten-Spritzgusses aufzubringen, sodass sich schlussendlich wieder ein Bauteil ergibt.

Es kann in diesem Fall aber auch vorgesehen sein, dass die zumindest eine Blendenvorrichtung 50 als von der Eintritts-Optik 30 und der Austritts-Optik 40 getrennt ausgebildetes Bauteil ausgebildet ist, wie dies in Figur 4c gezeigt ist. In diesem Fall kann die Blendenvorrichtung 50 in Form einer präzisen Maske z.B. aus Metall (Lochmaske, Strichmasken, Raster, etc.) eingefügt werden.

An dieser Stelle sei noch ausgeführt, dass in den bisherigen Figuren die Innenflächen der Optiken 30, 40 glatt ausgebildet sind, während die Außenflächen gekrümmt dargestellt sind. Grundsätzlich ist es auch möglich, dass eine oder beide Innenflächen der Optiken 30, 40 gekrümmt ausgebildet sind, allerdings ist dies nur im Falle einer zwei- oder mehrteiligen Ausgestaltung möglich.

Eine einstückige Ausgestaltung hat den Vorteil, dass nach der Fertigung, die exakt erfolgen muss, ein einziger, stabiler Bauteil vorhanden ist, der problemlos verbaut werden kann.

Im Falle einer zumindest zweistückigen Ausgestaltung, bei der Eintritts- und Austritts-Optik voneinander getrennt sind, ist ein Positionieraufwand der einzelnen Bauteile beim Zusammenbau notwendig, von Vorteil bei dieser Ausgestaltungsform ist allerdings, dass die einzelnen Bauteile - wie weiter unten noch erläutert - relativ zueinander bewegt werden können.

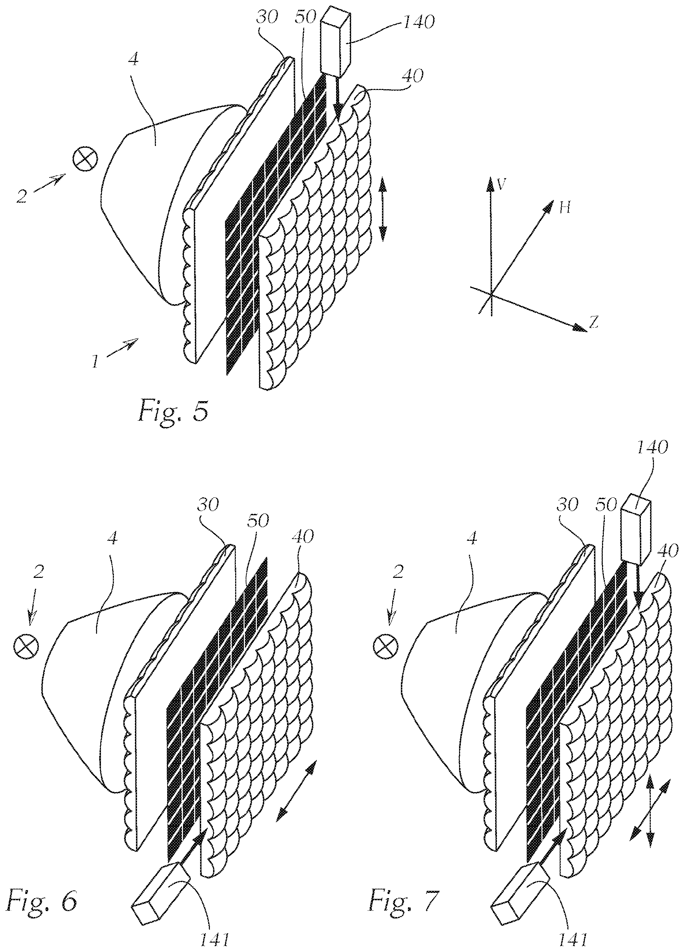

Die Figuren 5 - 7 zeigen Ausführungsformen bei welchen die Austrittsoptik 40 in Bezug auf die Eintrittsoptik 30 verschiebbar gelagert ist. Die Eintrittsoptik 30 und die getrennt davon (wie gezeigt) oder gemeinsam mit der Eintrittsoptik 30 ausgebildete (nicht gezeigt) Blendenvorrichtung 50 ist/sind von der Austrittsoptik 40 entsprechend getrennt ausgebildet.

Die Austrittsoptik 40 ist dabei - in Einbaulage des Lichtmoduls 1 - in vertikaler (Figur 5), horizontaler (Figur 6) oder vertikaler und horizontaler (Figur 7) Richtung verschiebbar. Auf diese Weise lässt sich das Lichtbild in vertikaler und/oder horizontaler Richtung, z.B. zur Leuchtweitenregulierung und/oder zur Realisierung einer dynamischen Kurvenlichtfunktion verschieben.

Die Austrittsoptik 40 wird dabei vorzugsweise parallel zu der Eintrittsoptik 30, und/oder parallel zu der gegebenenfalls vorhandenen Blendenvorrichtung 50 verschoben.

Zum Verschieben der Austrittsoptik 40 in jeweils einer Richtung ist jeweils ein Aktuator 140, 141 vorgesehen, wobei bei einer konkreten Ausführungsform vorgesehen ist, dass der zumindest eine Aktuator 140, 141 ein Piezoaktuator ist. Ein typischer Stellweg für einen solchen Piezoaktuator liegt im Bereich von 100 µm. Grundsätzlich können aber auch anderen Aktuatoren mit einem Stellweg von < 1 mm zum Einsatz kommen.

Um eine gleichmäßige Verschiebung des gesamten Lichtbildes, bei dem sich also das Lichtbild an sich nicht ändert, sondern nur seine Lage, zu erreichen, ist es günstig, wenn alle von der Verschiebung betroffenen Mikro-Optik-Systeme, insbesondere die Mikro-Austritts-Optiken dieselben optischen Parameter aufweisen, insbesondere identisch ausgebildet sind.

Außerdem ist bei der Auslegung der Projektionseinrichtung darauf zu achten, dass auch bei einer Verschiebung der Austrittsoptik kein Licht oder nur ein geringer Anteil des Lichtes, welches aus einer Mikro-Eintritts-Optik austritt, in eine nicht zugeordnete Mikro-Austritts-Optik eintritt.

Es kann aber auch vorgesehen sein, dass die Mikro-Optik-Systeme unterschiedlich ausgebildet sind, um eine gezielte Veränderung des Lichtbildes zu erreichen.

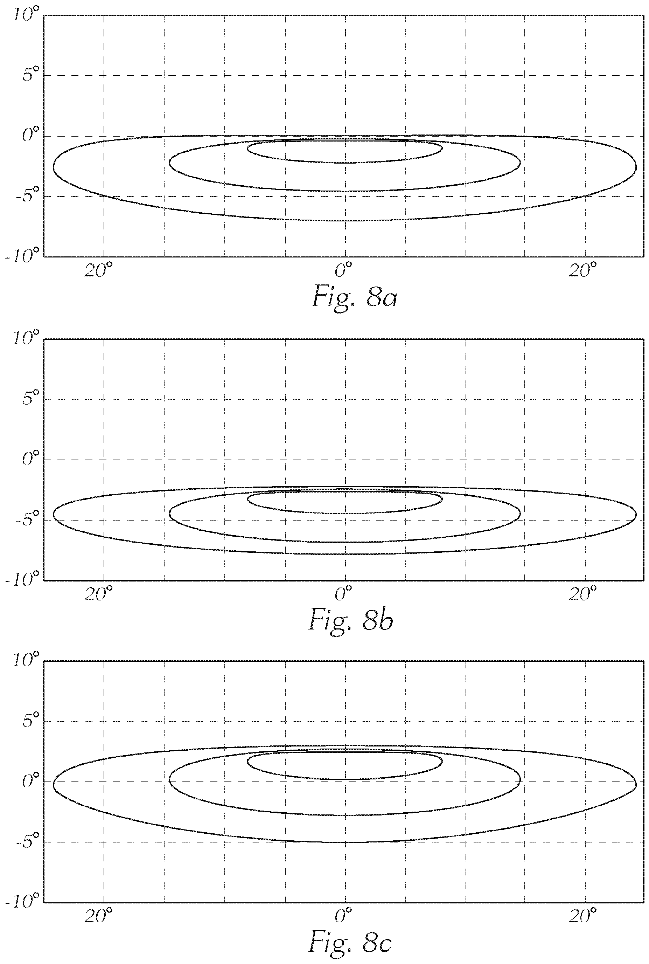

In der konkreten beispielhaften Ausführungsform reicht eine geringe Verschiebung der abbildenden Optik, d.h. der Austrittsoptik z.B. um 0,03 mm für eine Verschiebung des Lichtbildes um 0,8°. Beispielhaft zeigt Figur 8a eine schematische Lichtverteilung, Figur 8b zeigt dieselbe Lichtverteilung nach einem Verschieben der Austrittsoptik vertikal nach unten, Figur 8c zeigt die Auswirkungen des Verschiebens der Austrittsoptik vertikal nach oben auf die Lichtverteilung. Die Form der Lichtverteilung hat sich dabei nicht oder nur unwesentlich geändert, während die Lichtverteilung nach oben bzw. unten gewandert ist.

Eine Leuchtweitenregulierung von ca. 2,5° lässt sich beispielsweise mit einem Hub von ca. 1mm erreichen.

Durch Verschieben der Austritts-Optik kann es zu gewissen Verzerrungen des Lichtbildes kommen. Bei der Auslegung des Gesamtsystems ist dabei darauf Bedacht zu nehmen, dass diese Verzerrungen den rechtlichen und technischen Anforderungen genügen.

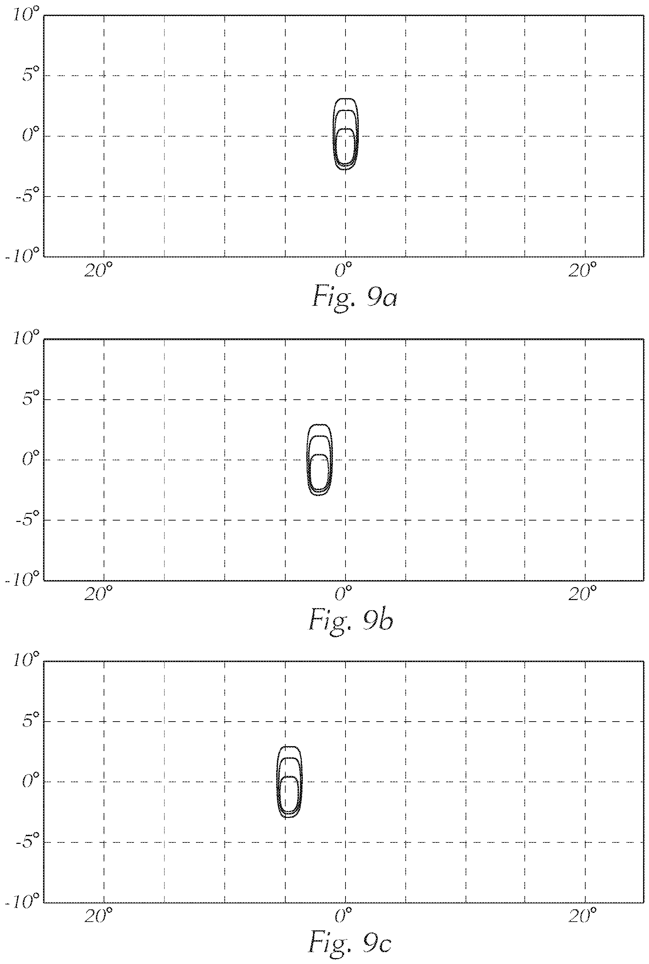

Figur 9a zeigt eine Teillichtverteilung, erzeugt mit einem erfindungsgemäßen Lichtmodul oder einer oder mehreren Mikro-Optik-Systemen eines solchen Lichtmoduls, Figur 9b zeigt die Auswirkungen eines Verschiebens der Austrittsoptik horizontal nach links auf die Teillichtverteilung aus Figur 9a, und Figur 9c die Auswirkungen eines noch weiteren Verschiebens der Austrittsoptik horizontal nach links auf die Teillichtverteilung. Figur 9b zeigt dabei ein Verschieben der abbildenden Austrittsoptik um ca. 0,1 mm und Figur 9c um ca. 0,2 mm.

Wie zu erkennen ist, reicht eine geringe Verschiebung aus, um eine merkliche Verschiebung des Lichtbildes in vertikaler und/oder horizontaler Richtung zu realisieren.

Bei einem herkömmlichen Projektionssystem mit einer Projektionslinse weist die Linse typische Durchmesser zwischen 60 mm und 90 mm auf. Bei einem erfindungsgemäßen Modul weisen die einzelnen Mikro-Optik-Systeme typische Abmessungen von ca. 2 mm x 2 mm (in V und H) und eine Tiefe (in Z) von ca. 6mm - 10 mm auf, sodass sich in Z-Richtung eine deutlich geringere Tiefe eines erfindungsgemäßen Moduls im Vergleich zu herkömmlichen Modulen ergibt.

Die beschriebenen Lichtmodule weisen eine geringe Bautiefe auf und sind grundsätzlich frei formbar, d.h. es ist z.B. möglich ein erstes Lichtmodul zur Erzeugung einer ersten Teillichtverteilung getrennt von einer zweiten Lichtmodul für eine zweite Teillichtverteilung auszugestalten und diese relativ frei, d.h. vertikal und/oder horizontal und/oder in der Tiefe zueinander versetzt anzuordnen, sodass sich auch Designvorgaben einfacher realisieren lassen.

Ein weiterer Vorteil des Lichtmoduls ist jener, dass zwar die Projektionseinrichtung sehr genau herzustellen ist, was mit heutigen Produktionsmethoden aber problemlos möglich ist, dafür aber das exakte Positionieren der Lichtquelle(n) in Bezug auf die Projektionsoptik entfällt. Eine exakte Positionierung ist insofern nur noch von untergeordneter Bedeutung, als die zumindest eine Lichtquelle einen ganzen Array von Mikro-Eintritts-Optiken beleuchtet, die alle im Wesentlichen dasselbe Lichtbild erzeugen. Anders formuliert bedeutet dies nichts anderes, als dass die "eigentliche" Lichtquelle von der oder den realen Lichtquelle(n) und dem Array der Mikro-Eintritts-Optiken gebildet ist. Diese "eigentliche" Lichtquelle beleuchtet dann die Mikro-Austritts-Optiken und gegebenenfalls die zugeordneten Blenden. Nachdem nun aber die Mikro- Eintritts- und Mikro-Austritts-Optiken bereits optimal aufeinander abgestimmt sind, da diese quasi ein System bilden, fällt eine nicht exakte Positionierung der realen Lichtquelle(n) weniger ins Gewicht.

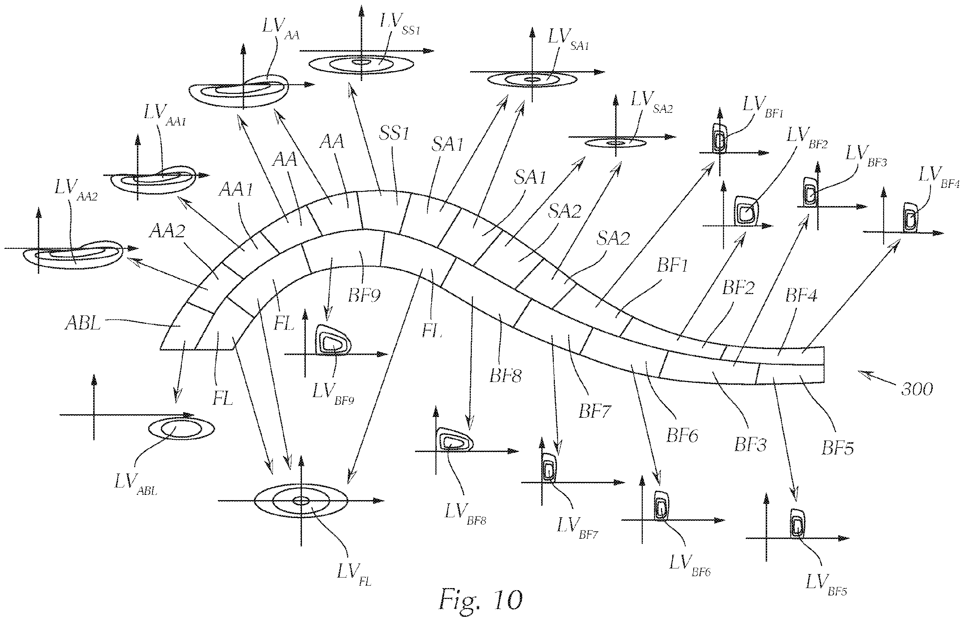

Figur 10 zeigt noch eine Beleuchtungsvorrichtung für einen Fahrzeugscheinwerfer gelöst, welche eine Anzahl an Mikroprojektions-Lichtmodulen, wie sie oben beschrieben wurden, umfasst. Dabei sind mehrere Gruppen von unterschiedlichen Lichtmodulen vorgesehen, z.B. sind in Figur 10 Lichtmodule der Gruppen AA, AA1, AA2, SS1, BF1 - BF8, FL, ABL, SA1, SA2 dargestellt, die gemeinsam die Beleuchtungsvorrichtung bilden. Jede Gruppe AA, AA1, AA2, SS1, BF1 - BF8, FL, ABL, SA1, SA2 umfasst ein, zwei oder mehrere Lichtmodule.

In dem gezeigten Beispiel enthält jede Gruppe genau ein Lichtmodul, welche im Folgenden aufgezählt sind. Dabei bezeichnet:
AA ein Lichtmodul zur Erzeugung eines asymmetrischen Abblendlichts LV_{AA} im Fernfeld;
AA1, AA2 asymmetrisches Abblendlicht LV_{AA1}, LV_{AA2} im Fernfeld im Kurvenlichtmodul;
SS1 Lichtmodul zur Erzeugung einer symmetrischen Lichtverteilung LV_{SS1} (Vorfeld eines Abblendlichts, Stadtlicht);
BF1 ... BF8 Lichtmodule zur Erzeugung eines blendfreien Fernlichtes LV_{BF1} - LV_{BF8}; die einzelnen Lichtverteilungen LV_{BF1} - LV_{BF8} erzeugen gemeinsam eine Fernlichtverteilung bzw. einen Teil davon, die einzelnen Lichtverteilungen können bei Bedarf unabhängig voneinander ausgeblendet werden;
FL ein Lichtmodul zur Erzeugung eines Fernlichts LV_{FL};
ABL ein Lichtmodul zur Erzeugung eines Abbiegelichts LV_{ABL};
SA1, SA2 zusätzliche Lichtanteile für Autobahnlicht LV_{SA1}, LV_{SA2}.

Von Vorteil ist es bei einer solchen Beleuchtungsvorrichtung, wenn die Lichtquellen jeder Gruppe von Lichtmodulen AA, AA1, AA2, SS1, BF1 - BF8, FL, ABL, SA1, SA2 unabhängig von den Lichtquellen der anderen Gruppen ansteuerbar sind, sodass die einzelnen Lichtverteilungen bzw. Teillichtverteilungen unabhängig voneinander ein- und ausgeschaltet und/oder gedimmt werden können.

Figur 10 ist eine rein schematische Darstellung, und es ist im Zusammenhang mit Figur 10 von "Lichtmodulen" die Rede. Tatsächlich zeigt Figur 10 lediglich und rein schematisch die Projektionseinrichtungen AA, AA1, AA2, SS1, BF1 - BF8, FL, ABL, SA1, SA2 der einzelnen Mikro-Projektions-Lichtmodule, und wie in Figur 10 zu erkennen ist, bilden die Projektionseinrichtungen AA, AA1, AA2, SS1, BF1 - BF8, FL, ABL, SA1, SA2 der einzelnen Lichtmodule ein gemeinsames Bauteil in Form z.B. eines geschwungenen Bandes. Diese Projektionseinrichtungen können beispielsweise auf einer Folie angeordnet sein.

Es können mit der vorliegenden Erfindung somit die Linsenarrays aus Mikro-Eintritts- und Mikro-Austritts-Optiken frei geformt werden, und es können auch zwei oder mehrere erfindungsgemäße Lichtmodule über ein gemeinsames Projektionseinrichtungs-Bauteil zu einer Beleuchtungsvorrichtung zusammengefasst werden, wobei vorzugsweise dann jenen Bereichen des Projektionseinrichtungs-Bauteiles, welche einem bestimmten Lichtmodul (und somit einer unabhängig ansteuerbaren Lichtquelle) zugeordnet sind, die Mikro-Optik-Systeme identische ausgebildet sind.

Figur 12 zeigt schließlich noch eine weitere Anwendungsmöglichkeit der Erfindung. Bei dieser Ausführungsform ist vorgesehen, dass unterschiedliche Bereiche, z.B. genau drei unterschiedliche Bereiche, von Mikro-Optik-Systemen 3 mit Lichtquellen 2 unterschiedlicher Farbe (R, G, B) beleuchtet werden, beispielsweise ein Bereich mit rotem Licht (R), ein anderer Bereich mit grünem Licht (G) und ein dritter Bereich mit blauem Licht (B).

Die unterschiedlichen Bereiche können dabei zu einem Projektionsmodul 3 (wie dargestellt), aber auch zu unterschiedlichen (zwei oder mehreren, z.B. drei) Projektionsmodulen bzw. zu einer Projektionseinrichtung oder zu zwei oder mehreren, insbesondere drei Projektionseinrichtungen gehören. Wichtig ist dabei lediglich, dass jeder unterschiedliche Bereich an Mikro-Optik-Systemen dieselbe Lichtverteilung wie die anderen Bereiche erzeugt.

Durch Überlagerung der Lichtbilder aus den unterschiedlichen Bereichen ergibt sich dann insgesamt ein weißes Lichtbild.

Verwendet man in diesem Zusammenhang als Lichtquellen Laser-Lichtquellen - siehe dazu insbesondere auch die Erörterungen weiter oben -, so werden auf Grund der hohen Leuchtintensitäten von Lasern nur wenige Mikroprojektionsarrays (Bereiche) zur Erzeugung einer weißen Lichtverteilung benötigt, sodass sich in lateraler Richtung ein kleineres Lichtmodul erzeugen lässt.

## Patentansprüche

1. Kraftfahrzeugscheinwerfer ausgebildet als Beleuchtungsvorrichtung bzw. umfassend zumindest
eine Beleuchtungsvorrichtung, wobei die eine bzw. die zumindest eine Beleuchtungsvorrichtung eine Anzahl an Mikroprojektions-Lichtmodulen (1) umfasst, wobei ein Mikroprojektions-Lichtmodul (1) umfasst:
*) zumindest eine Lichtquelle (2) sowie
*) zumindest eine Projektionseinrichtung (3), welche das von der zumindest einen Lichtquelle (2) austretende Licht in einen Bereich vor dem Kraftfahrzeug in Form von zumindest einer Lichtverteilung abbildet, wobei
die Projektionseinrichtung (3) umfasst:
-) eine Eintrittsoptik (30), welche aus einer Anzahl Mikro-Eintrittsoptiken (31) besteht, welche vorzugsweise in einem Array angeordnet sind,
-) eine Austrittsoptik (40), welche aus einer Anzahl an Mikro-Austrittsoptiken (41) besteht, welche vorzugsweise in einem Array angeordnet sind, wobei
jeder Mikro-Eintrittsoptik (31) genau eine Mikro-Austrittsoptik (41) zugeordnet ist,
wobei die Mikro-Eintrittsoptiken (31) derart ausgebildet und/oder die Mikro-Eintrittsoptiken (31) und die Mikro-Austrittsoptiken (41) derart zueinander angeordnet sind, dass im Wesentlichen das gesamte aus einer Mikro-Eintrittsoptik (31) austretende Licht genau nur in die zugeordnete Mikro-Austrittsoptik (41) eintritt, und wobei
das von den Mikro-Eintrittsoptiken (31) vorgeformte Licht von den Mikro-Austrittsoptiken (41) in einen Bereich vor dem Kraftfahrzeug als zumindest eine Lichtverteilung (LV1 - LV5; GLV) abgebildet wird, **dadurch gekennzeichnet, dass**
zwischen der Eintrittsoptik (30) und der Austrittsoptik (40) zumindest eine Blendenvorrichtung (50) angeordnet ist.

2. Scheinwerfer nach Anspruch 1, **dadurch gekennzeichnet, dass** jede Mikro-Eintrittsoptik (31) das durch sie durchtretende Licht in zumindest einen Mikro-Eintrittsoptik-Brennpunkt (F1) fokussiert, wobei vorzugsweise ein Mikro-Eintrittsoptik-Brennpunkt (F1) jeder Mikro-Eintrittsoptiken (31) in Lichtaustrittsrichtung vor der zugeordneten Mikro-Austrittsoptik (41) liegt, wobei insbesondere die Mikro-Eintrittsoptiken (31) das durch sie durchtretende Licht in vertikaler Richtung jeweils auf den vor der Mikro-Austrittsoptik (30) liegenden Mikro-Eintrittsoptik-Brennpunkt (F1) fokussieren.

3. Scheinwerfer nach Anspruch 2, **dadurch gekennzeichnet, dass** die Mikro-Austrittsoptiken (41) einen jeweils mit dem Mikro-Eintrittsoptik-Brennpunkt (F1) der zugeordneten Mikro-Eintrittsoptik (31) zusammenfallenden Brennpunkt aufweisen.

4. Scheinwerfer nach Anspruch 2 oder 3, **dadurch gekennzeichnet, dass** jedes Mikro-Optik-System bestehend aus Mikro-Eintrittsoptik (31) und Mikro-Austrittsoptik (41) das durch sie durchtretende Licht in horizontaler Richtung aufweitet.

5. Scheinwerfer nach einem der Ansprüche 1 bis 4, **dadurch gekennzeichnet, dass** die Mikro-Eintrittsoptiken (31) als Sammeloptiken ausgebildet sind.

6. Scheinwerfer nach einem der Ansprüche 1 bis 5, **dadurch gekennzeichnet, dass** die Mikro-Eintrittsoptiken (31) als Freiform-Optiken ausgebildet sind.

7. Scheinwerfer nach einem der Ansprüche 1 bis 6, **dadurch gekennzeichnet, dass** die Mikro-Austrittsoptiken (41) als Projektionsoptiken ausgebildet sind.

8. Scheinwerfer nach einem der Ansprüche 1 bis 7, **dadurch gekennzeichnet, dass** die Mikro-Austrittsoptiken (41) als sphärische oder asphärische Linsen ausgebildet sind, oder die Mikro-Austrittsoptiken (41) als Freiform-Linsen ausgebildet sind.

9. Scheinwerfer nach einem der Ansprüche 1 bis 8, **dadurch gekennzeichnet, dass** die einander zugewandten Grenzflächen (31', 41') von einander zugeordneten Mikro-Eintrittsoptiken (31) und Mikro-Austrittsoptiken (41) kongruent zueinander ausgebildet und vorzugsweise auch kongruent zueinander angeordnet sind.

10. Scheinwerfer nach einem der Ansprüche 1 bis 9, **dadurch gekennzeichnet, dass** die optischen Achsen (310, 410) von einander zugeordneten Mikro-Eintrittsoptiken (31) und Mikro-Austrittsoptiken (41) parallel zueinander verlaufen, wobei vorzugsweise die optischen Achsen (310, 410) zusammenfallen.

11. Scheinwerfer nach Anspruch 9 oder 10, **dadurch gekennzeichnet, dass** die Grenzflächen (31', 41') plan ausgebildet sind.

12. Scheinwerfer nach einem der Ansprüche 1 bis 11, **dadurch gekennzeichnet, dass** die Blendenvorrichtung (50) in einer Ebene liegt, welche von den Mikro-Austrittsoptik-Brennpunkten (F1) aufgespannt ist, wobei vorzugsweise die Blendenvorrichtung (50) für zumindest ein Paar von einander zugeordneten Mikro-Eintritts- und Mikro-Austrittsoptiken (31, 41), vorzugsweise für mehrere Paare und insbesondere für alle Paare eine Blende (51, 52, 53, 54, 55) mit jeweils zumindest einer, beispielsweise genau einer optisch wirksamen Blendenkante (51', 52', 53', 54', 55') aufweist, wobei vorzugsweise alle Blenden identische Blendenkanten aufweisen.

13. Scheinwerfer nach Anspruch 12, **dadurch gekennzeichnet, dass** zumindest zwei Blenden unterschiedlich gestaltete Blendenkanten aufweisen.

14. Scheinwerfer nach einem der Ansprüche 1 bis 13, **dadurch gekennzeichnet, dass** die Projektionseinrichtung (3) bestehend aus Eintrittsoptik (30) und Austrittsoptik (40), und gegebenenfalls aus Blendeneinrichtung (50), einteilig ausgebildet ist, oder die Projektionseinrichtung (3) bestehend aus Eintrittsoptik (30) und Austrittsoptik (40) aus zwei voneinander getrennten Bauteilen gebildet ist.

15. Scheinwerfer nach einem der Ansprüche 1 bis 14, **dadurch gekennzeichnet, dass** die zumindest eine Blendenvorrichtung (50) auf der der Austritts-Optik (40) zugewandten Grenzfläche (31') der Eintrittsoptik (30) angeordnet ist, oder die zumindest eine Blendenvorrichtung (50) als von der Eintritts-Optik (30) und der Austritts-Optik (40) getrennt ausgebildetes Bauteil ausgebildet ist.

16. Scheinwerfer nach einem der Ansprüche 1 bis 15, **dadurch gekennzeichnet, dass** die zumindest eine Lichtquelle (2) zumindest eine Halbleiterlichtquelle, z.B. zumindest eine Leuchtdiode und/oder zumindest eine Laserdiode umfasst.

17. Scheinwerfer nach einem der Ansprüche 1 bis 16, **dadurch gekennzeichnet, dass** zwischen der zumindest einen Lichtquelle (2) und der zumindest einen Projektionseinrichtung (3) zumindest eine Vorsatzoptikeinrichtung (4) angeordnet ist, in welche zumindest eine Vorsatzoptikeinrichtung (4) die zumindest eine Lichtquelle (2) das von ihr emittierte Licht in einstrahlt, und welche Vorsatzoptikeinrichtung (4) derart ausgebildet ist, dass das aus ihr austretende Licht im Wesentlichen parallel gerichtet ist, wobei vorzugsweise die Vorsatzoptikeinrichtung (4) als Kollimator ausgebildet ist.

18. Scheinwerfer nach einem der Ansprüche 14 bis 17, **dadurch gekennzeichnet, dass** die Austrittsoptik (40) in Bezug auf die Eintrittsoptik (30) verschiebbar gelagert ist, wobei vorzugsweise die Austrittsoptik (40) - in Einbaulage des Lichtmoduls (1) - in vertikaler und/oder horizontaler Richtung verschiebbar ist.

19. Scheinwerfer nach Anspruch 18, **dadurch gekennzeichnet, dass** die Austrittsoptik (40) parallel zu der Eintrittsoptik (30), und/oder parallel zu einer gegebenenfalls vorhandenen Blendenvorrichtung (50) verschiebbar ist.

20. Scheinwerfer nach Anspruch 18 oder 19, **dadurch gekennzeichnet, dass** zum Verschieben der Austrittsoptik (40) in jeweils einer Richtung jeweils ein Aktuator (140,141) vorgesehen ist, wobei vorzugsweise der zumindest eine Aktuator (140, 141) ein Piezoaktuator ist.

21. Schweinwerfer nach einem der Ansprüche 1 bis 20, **dadurch gekennzeichnet, dass** die Leuchtdioden und/oder Laserdioden einer Lichtquelle unabhängig voneinander ansteuerbar sind.

22. Scheinwerfer nach einem der Ansprüche 1 bis 21, **dadurch gekennzeichnet, dass** bei zwei oder mehr Lichtquellen für die Lichtmodul (1) die Lichtquellen unabhängig voneinander ansteuerbar sind.

23. Scheinwerfer nach einem der Ansprüche 1 bis 22, **dadurch gekennzeichnet, dass** jedem Mikro-System bestehend aus einer Mikro-Eintrittsoptik (31) und einer Mikro-Austrittsoptik (41) genau eine Lichtquelle, welche vorzugsweise genau eine Leuchtdiode oder genau eine Laserdiode umfasst, zugeordnet ist.

24. Scheinwerfer nach einem der Ansprüche 1 bis 23, **dadurch gekennzeichnet, dass** zwei oder mehr Lichtquellen-Gruppen von vorgesehen sind, wobei jede Lichtquellen-Gruppen zumindest eine Lichtquelle (2) umfasst, und wobei Lichtquellen (2) einer Lichtquellen-Gruppen Licht derselben Farbe (R, G, B) emittieren, und wobei Lichtquellen unterschiedlicher Lichtquellen-Gruppen Licht unterschiedlicher Farbe (R, G, B) emittieren, und wobei jede Lichtquellen-Gruppen einen eigens dieser Lichtquellen-Gruppen zugeordneten Bereich (3R, 3G, 3B) der zumindest einen Projektionseinrichtung beleuchten, und wobei die unterschiedlichen Bereiche (3R, 3G, 3B) identisch ausgebildet bzw. zur Erzeugung identischer Lichtverteilungen ausgebildet sind, wobei vorzugsweise drei Lichtquellen-Gruppen vorgesehen sind, wobei vorzugsweise eine Lichtquellen-Gruppen rotes Licht, eine Lichtquellen-Gruppen grünes Licht und eine Lichtquellen-Gruppen blaues Licht emittiert.

25. Scheinwerfer nach einem der Ansprüche 1 bis 24, **dadurch gekennzeichnet, dass** zwei oder mehr Gruppen von Lichtmodulen (AA, AA1, AA2, SS1, BF1 - BF8, FL, ABL, SA1, SA2) vorgesehen sind, und wobei jede Gruppe ein, zwei oder mehrere Lichtmodule (1) umfasst, wobei Lichtmodule (AA, AA1, AA2, SS1, BF1 - BF8, FL, ABL, SA1, SA2) einer Gruppe dieselbe Lichtverteilung (LVAA, LV_{AA1}, LV_{AA2}, LV_{SS1}, LV_{BF1} - LV_{BF8}, LV_{FL}, LV_{ABL}, LV_{SA1}, LV_{SA2}) erzeugen, und wobei Lichtmodule (AA, AA1, AA2, SS1, BF1 - BF8, FL, ABL, SA1, SA2) aus unterschiedlichen Gruppen unterschiedliche Lichtverteilungen (LV_{AA}, LV_{AA1}, LV_{AA2}, LV_{SS1}, LV_{BF1} - LV_{BF8}, LV_{FL}, LV_{ABL}, LV_{SA1}, LV_{SA2}) erzeugen, wobei vorzugsweise die Lichtquellen jeder Gruppe von Lichtmodulen unabhängig von den Lichtquellen der anderen Gruppen ansteuerbar sind.

26. Scheinwerfer nach Anspruch 25, **dadurch gekennzeichnet, dass** die Projektionseinrichtungen (3) von Lichtmodulen (AA, AA1, AA2, SS1, BF1 - BF8, FL, ABL, SA1, SA2) einer Gruppe ein gemeinsames Bauteil bilden.

27. Scheinwerfer nach Anspruch 24 oder 25, **dadurch gekennzeichnet, dass** die Projektionseinrichtungen (3) aller Lichtmodule ein gemeinsames Bauteil (300) bilden.

28. Scheinwerfer nach Anspruch 26 oder 27, **dadurch gekennzeichnet, dass** das oder die gemeinsamen Bauteile (300) in Form einer Folie ausgebildet ist/sind.

29. Scheinwerfer nach einem der Ansprüche 25 bis 28, **dadurch gekennzeichnet, dass** zwei oder mehr Gruppen zur Erzeugung unterschiedlicher Lichtverteilung (LV_{AA}, LV_{AA1}, LV_{AA2}, LV_{SS1}, LV_{BF1} - LV_{BF8}, LV_{FL}, LV_{ABL}, LV_{SA1}, LV_{SA2}) vorgesehen sind, wobei jede Gruppe eine unterschiedliche Lichtverteilung (LV_{AA}, LV_{AA1}, LV_{AA2}, LV_{SS1}, LV_{BF1} - LV_{BF8}, LV_{FL}, LV_{ABL}, LV_{SA1}, LV_{SA2}) bildet, die aus einer der folgenden Lichtverteilungen (LV_{AA}, LV_{AA1}, LV_{AA2}, LV_{SS1}, LV_{BF1} - LV_{BF8}, LV_{FL}, LV_{ABL}, LV_{SA1}, LV_{SA2}) gewählt ist:
*) Abbiegelicht-Lichtverteilung;
*) Stadtlicht-Lichtverteilung;
*) Landstraßenlicht-Lichtverteilung;
*) Autobahnlicht-Lichtverteilung;
*) Lichtverteilung für Zusatzlicht für Autobahnlicht;
*) Kurvenlicht-Lichtverteilung;
*) Abblendlicht-Lichtverteilung;
*) Abblendlicht-Vorfeld-Lichtverteilung;
*) Lichtverteilung für asymmetrisches Abblendlicht im Fernfeld;
*) Lichtverteilung für asymmetrisches Abblendlicht im Fernfeld im Kurvenlichtmodus;
*) Fernlicht-Lichtverteilung;
*) Blendfreies Fernlicht-Lichtverteilung.

30. Scheinwerfer nach einem der Ansprüche 25 bis 29, umfassend zwei oder mehr Lichtmodule, wobei jedes Lichtmodul zumindest eine Lichtquellen-Gruppe aufweist, wobei jede Lichtquellen-Gruppe zumindest eine Lichtquelle umfasst, und wobei Lichtquellen einer Lichtquellen-Gruppe Licht derselben Farbe (R, G, B) emittieren, und wobei zumindest zwei Lichtquellen-Gruppen vorgesehen sind, welche Licht unterschiedlicher Farbe emittieren, und wobei jede Lichtquellen-Gruppe einen eigens dieser Lichtquellen-Gruppen zugeordneten Bereich (3R, 3G, 3B) der zumindest einen Projektionseinrichtung ihres Lichtmoduls beleuchten, und wobei die unterschiedlichen Bereiche (3R, 3G, 3B) identisch ausgebildet bzw. zur Erzeugung identischer Lichtverteilungen ausgebildet sind, wobei vorzugsweise drei Gruppen von Lichtquellen-Gruppen vorgesehen sind, wobei vorzugsweise eine Gruppe an Lichtquellen-Gruppen rotes Licht, eine Gruppe an Lichtquellen-Gruppen grünes Licht und eine Gruppe an Lichtquellen-Gruppen blaues Licht emittiert, und wobei jede Gruppe von Lichtquellen-Gruppen zumindest eine Lichtquellen-Gruppe umfasst.

## Claims

1. Motor vehicle headlamp designed as a lighting device or comprising at least
an illumination device, said one or at least one illumination device comprising a number of microprojection light modules (1), wherein a microprojection light module (1) comprises
*) at least one light source (2) and
*) at least one projection device (3) which images the light emerging from the at least one light source (2) into an area in front of the motor vehicle in the form of at least one light distribution, wherein
the projection device (3):
-) an entrance optic (30), which consists of a number of micro entrance optics (31), which are preferably arranged in an array,
-) an exit optic (40), which consists of a number of micro exit optics (41), which are preferably arranged in an array, wherein
exactly one micro-entry optic (31) is assigned to each micro-exit optic (41),
wherein the micro-entry optics (31) are designed and/or the micro-entry optics (31) and the micro-exit optics (41) are arranged relative to one another in such a way that substantially all the light emerging from a micro-entry optic (31) enters exactly only the associated micro-exit optic (41), and wherein
the light preformed by the micro-entry optics (31) is imaged by the micro-exit optics (41) into an area in front of the motor vehicle as at least one light distribution (LV1 - LV5; GLV), **characterized in that**
at least one diaphragm device (50) is arranged between the entrance optics (30) and the exit optics (40).

2. Headlamp according to claim 1, **characterized in that** each micro-entry optic (31) focuses the light passing through it into at least one micro-entry optic focal point (F1), preferably one micro-entry optic focal point (F1) of each micro-entry optic (31) lying in front of the associated micro-exit optic (41) in the light exit direction, wherein in particular the micro-entry optics (31) focus the light passing through them in the vertical direction in each case on the micro-entry optics focal point (F1) located in front of the micro-exit optics (30).

3. Headlamp according to claim 2, **characterized in that** the micro-exit optics (41) have a focal point coinciding in each case with the micro-entry optics focal point (F1) of the associated micro-entry optics (31).

4. Headlamp according to claim 2 or 3, **characterized in that** each micro-optics system consisting of micro-input optics (31) and micro-output optics (41) expands the light passing through them in the horizontal direction.

5. Headlamp according to one of claims 1 to 4, **characterized in that** the micro-entry optics (31) are designed as collecting optics.

6. Headlamp according to any one of claims 1 to 5, **characterized in that** the micro-entry optics (31) are designed as free-form optics.

7. Headlamp according to any one of claims 1 to 6, **characterized in that** the micro-outlet optics (41) are designed as projection optics.

8. Headlamp according to any one of claims 1 to 7, **characterized in that** the micro-exit optics (41) are designed as spherical or aspherical lenses, or the micro-exit optics (41) are designed as free-form lenses.

9. Headlamp according to any one of claims 1 to 8, **characterized in that** the mutually facing boundary surfaces (31', 41') of mutually associated micro-inlet optics (31) and micro-outlet optics (41) are designed congruent with one another and are preferably also arranged congruent with one another.

10. Headlamp according to any one of claims 1 to 9, **characterized in that** the optical axes (310, 410) of mutually associated micro-input optics (31) and micro-output optics (41) run parallel to one another, the optical axes (310, 410) preferably coinciding.

11. Headlamp according to claim 9 or 10, **characterized in that** the boundary surfaces (31', 41') are formed flat.

12. Headlamp according to any one of claims 1 to 11, **characterized in that** the diaphragm device (50) lies in a plane which is spanned by the micro-exit optics focal points (F1), preferably the diaphragm device (50) being designed for at least one pair of associated micro-entry and micro-exit optics (31, 41'), 41), preferably for several pairs and in particular for all pairs a diaphragm (51, 52, 53, 54, 55) with in each case at least one, for example exactly one optically effective diaphragm edge (51', 52', 53', 54', 55'), wherein preferably all diaphragms have identical diaphragm edges.

13. Headlamp according to claim 12, **characterized in that** at least two covers have differently designed cover edges.

14. Headlamp according to one of claims 1 to 13, **characterized in that** the projection device (3) consisting of entrance optics (30) and exit optics (40), and optionally of diaphragm device (50), is designed in one piece, or the projection device (3) consisting of entrance optics (30) and exit optics (40) is formed from two components separated from one another.

15. Headlamp according to one of claims 1 to 14, **characterized in that** the at least one diaphragm device (50) is arranged on the boundary surface (31') of the entrance optics (30) facing the exit optics (40), or the at least one diaphragm device (50) is formed as a component separate from the entrance optics (30) and the exit optics (40).

16. Headlamp according to any one of claims 1 to 15, **characterized in that** the at least one light source (2) comprises at least one semiconductor light source, for example at least one light-emitting diode and/or at least one laser diode.

17. Headlamp according to one of claims 1 to 16, **characterised in that** at least one optical attachment device (4) is arranged between the at least one light source (2) and the at least one projection device (3), into which at least one optical attachment device (4) the at least one light source (2) radiates the light emitted by it, and which optical attachment device (4) is designed in such a way that the light emerging from it is directed essentially parallel, the optical attachment device (4) preferably being designed as a collimator.

18. Headlamp according to one of claims 14 to 17, **characterized in that** the exit optics (40) is mounted displaceably with respect to the entrance optics (30), the exit optics (40) preferably being displaceable - in the installation position of the light module (1) - in the vertical and/or horizontal direction.

19. Headlamp according to claim 18, **characterised in that** the output optics (40) is displaceable parallel to the input optics (30) and/or parallel to a possibly existing diaphragm device (50).

20. Headlamp according to claim 18 or 19, **characterised in that** an actuator (140, 141) is provided for displacing the exit optics (40) in one direction in each case, wherein preferably the at least one actuator (140, 141) is a piezo actuator.

21. Headlamp according to one of claims 1 to 20, **characterized in that** the light-emitting diodes and/or laser diodes of a light source can be driven independently of one another.

22. Headlamp according to one of claims 1 to 21, **characterized in that** in the case of two or more light sources for the light module (1), the light sources can be driven independently of one another.

23. Headlamp according to one of claims 1 to 22, **characterized in that** each micro-system consisting of a micro-entry optic (31) and a micro-exit optic (41) is assigned exactly one light source, which preferably comprises exactly one light-emitting diode or exactly one laser diode.

24. Headlamp according to any one of claims 1 to 23, **characterized in that** two or more light source groups of are provided, wherein each light source group comprises at least one light source (2), and wherein light sources (2) of a light source group emit light of the same color (R, G, B), and wherein light sources of different light source groups emit light of different colours (R, G, B), and wherein each light source group illuminates an area (3R, 3G, 3B) of the at least one projection device specifically assigned to these light source groups, and wherein the different areas (3R, 3G, 3B) are identically formed or, respectively, identically shaped. are designed to generate identical light distributions, preferably three light source groups being provided, preferably one light source group emitting red light, one light source group emitting green light and one light source group emitting blue light.

25. Headlamp according to any one of claims 1 to 24, **characterized in that** two or more groups of light modules (AA, AA1, AA2, SS1, BF1 - BF8, FL, ABL, SA1, SA2) are provided, and wherein each group emits one, two or more light modules (1), wherein light modules (AA, AA1, AA2, SS1, BF1 - BF8, FL, ABL, SA1, SA2) of one group have the same light distribution (LVAA, LVAA1, LVAA2, LVSS1, LVBF1 - LVBF8, LVFL, LVABL, LVSA1, LVSA2), and wherein light modules (AA, AA1, AA2, SS1, BF1 - BF8, FL, ABL, SA1, SA2) from different groups produce different light distributions (LVAA, LVAA1, LVAA2, LVSS1, LVBF1 - LVBF8, LVFL, LVABL, LVSA1, LVSA2), whereby preferably the light sources of each group of light modules can be controlled independently of the light sources of the other groups.

26. Headlamp according to claim 25, **characterized in that** the projection devices (3) of light modules (AA, AA1, AA2, SS1, BF1 - BF8, FL, ABL, SA1, SA2) of a group form a common component.

27. Headlamp according to claim 24 or 25, **characterized in that** the projection devices (3) of all light modules form a common component (300).

28. Headlamp according to claim 26 or 27, **characterized in that** the common component or components (300) is/are formed in the form of a foil.

29. Headlamp according to any one of claims 25 to 28, **characterized in that** two or more groups for generating different light distribution (LVAA, LVAA1, LVAA2, LVSS1, LVBF1 - LVBF8, LVFL, LVABL, LVSA1, LVSA2) are provided, wherein each group forms a different light distribution (LVAA, LVAA1, LVAA2, LVSS1, LVBF1 - LVBF8, LVFL, LVABL, LVSA1, LVSA2) selected from one of the following light distributions (LVAA, LVAA1, LVAA2, LVSS1, LVBF1 - LVBF8, LVFL, LVABL, LVSA1, LVSA2)
*) Cornering light distribution;
*) city light distribution;
*) country road light distribution;
*) highway light distribution;
*) light distribution for auxiliary light for motorway light;
*) bend lighting light distribution;
*) low beam light distribution;
*) dipped-beam apron light distribution;
*) light distribution for asymmetrical dipped beam in the far field;
*) light distribution for asymmetrical dipped beam in far field in bend lighting mode;
*) high beam light distribution;
*) glare-free high beam light distribution.

30. Headlamp according to any one of claims 25 to 29, comprising two or more light modules, wherein each light module has at least one light source group, wherein each light source group comprises at least one light source, and wherein light sources of a light source group emit light of the same colour (R, G, B), and wherein at least two light source groups are provided, which emit light of different colours, and wherein each light source group illuminates a region (3R, 3G, 3B) of the at least one projection device of its light module, which region is specifically assigned to these light source groups, and wherein the different regions (3R, 3G, 3B) are identically formed or, as the case may be, identically formed. preferably three groups of light source groups are provided, preferably one group of light source groups emitting red light, one group of light source groups emitting green light and one group of light source groups emitting blue light, and each group of light source groups comprising at least one light source group.

## Revendications

1. Projecteur de véhicule à moteur conçu comme dispositif d'éclairage ou comportant au moins
un dispositif d'éclairage, ledit un ou au moins un dispositif d'éclairage comprenant un certain nombre de modules de lumière de microprojection (1), dans lequel un module de lumière de microprojection (1) comprend
*) au moins une source de lumière (2) et
*) au moins un dispositif de projection (3) qui reproduit la lumière sortant de la au moins une source lumineuse (2) dans une zone située devant le véhicule automobile sous la forme d'au moins une distribution de lumière, dans lequel
l'appareil de projection (3) :
-) une optique d'entrée (30), qui se compose d'un certain nombre de microoptiques d'entrée (31), qui sont de préférence disposées en réseau,
-) une optique de sortie (40), qui consiste en un certain nombre de microoptiques de sortie (41), qui sont de préférence disposées en réseau, dans laquelle
une optique de micro entrée (31) est attribuée à chaque optique de micro sortie (41),
dans lequel l'optique de micro-entrée (31) est conçue et/ou l'optique de micro-entrée (31) et l'optique de micro- sortie (41) sont disposées l'une par rapport à l'autre de telle manière que pratiquement toute la lumière sortant d'une optique de micro-entrée (31) entre exactement uniquement dans l'optique de micro- sortie (41) associée, et dans lequel
la lumière préformée par l'optique à micro-entrée (31) est reproduite par l'optique à micro- sortie (41) dans une zone située devant le véhicule automobile sous la forme d'au moins une distribution de lumière (LV1 - LV5 ; GLV), **caractérisée** en ce
au moins un dispositif à diaphragme (50) est disposé entre l'optique d'entrée (30) et l'optique de sortie (40).

2. Projecteur selon la revendication 1, **caractérisé en ce que** chaque optique à micro-entrée (31) focalise la lumière qui la traverse dans au moins un point focal d'optique à micro-entrée (F1), de préférence un point focal d'optique à micro-entrée (F1) de chaque optique à micro-entrée (31) se trouvant devant l'optique à micro- sortie (41) associée dans la direction de sortie de la lumière, dans laquelle en particulier les optiques à micro-entrée (31) concentrent la lumière qui les traverse dans la direction verticale sur le point focal (F1) de l'optique à micro-entrée situé devant l'optique à micro-sortie (30).

3. Projecteur selon la revendication 2, **caractérisé en ce que** les optiques de micro-sortie (41) ont un point focal coïncidant dans chaque cas avec le point focal (F1) de l'optique de micro-entrée associée (31).

4. Projecteur selon la revendication 2 ou 3, **caractérisé en ce que** chaque système micro-optique composé d'une optique à micro-entrée (31) et d'une optique à micro- sortie (41) élargit la lumière qui les traverse dans la direction horizontale.

5. Projecteur selon l'une des revendications 1 à 4, **caractérisé en ce que** l'optique à micro-entrée (31) est conçue comme optique de collecte.

6. Projecteur selon l'une quelconque des revendications 1 à 5, **caractérisé en ce que** les optiques à micro-entrée (31) sont conçues comme des optiques à forme libre.

7. Projecteur selon l'une des revendications 1 à 6, **caractérisé en ce que** les optiques à micro-sortie (41) sont conçues comme des optiques de projection.

8. Projecteur selon l'une des revendications 1 à 7, **caractérisé en ce que** les optiques de micro-sortie (41) sont conçues comme des lentilles sphériques ou asphériques, ou les optiques de micro-sortie (41) sont conçues comme des lentilles à forme libre.

9. Projecteur selon l'une quelconque des revendications 1 à 8, **caractérisé en ce que** les surfaces limites (31', 41') se faisant face de l'optique à micro-entrée (31) et de l'optique à micro- sortie (41) mutuellement associées sont conçues de manière congruente et sont de préférence également disposées de manière congruente.

10. Projecteur selon l'une quelconque des revendications 1 à 9, **caractérisé en ce que** les axes optiques (310, 410) de l'optique à micro-entrée (31) et de l'optique à micro- sortie (41) mutuellement associées s'étendent parallèlement l'un à l'autre, les axes optiques (310, 410) coïncidant de préférence.

11. Projecteur selon la revendication 9 ou 10, **caractérisé en ce que** les surfaces limites (31', 41') sont formées à plat.

12. Projecteur selon l'une quelconque des revendications 1 à 11, **caractérisé en ce que** le dispositif à diaphragme (50) se trouve dans un plan qui est traversé par les points focaux de l'optique de micro-sortie (F1), le dispositif à diaphragme (50) étant de préférence conçu pour au moins une paire d'optiques de micro-entrée et de micro-sortie associées (31, 41'), 41), de préférence pour plusieurs paires et en particulier pour toutes les paires un diaphragme (51, 52, 53, 54, 55) avec dans chaque cas au moins un, par exemple exactement un bord de diaphragme optiquement efficace (51', 52', 53', 54', 55'), dans lequel de préférence tous les diaphragmes ont des bords de diaphragme identiques.

13. Projecteur selon la revendication 12, **caractérisé en ce qu'**au moins deux couvercles ont des bords de couverture de conception différente.

14. Projecteur selon l'une des revendications 1 à 13, **caractérisé en ce que** le dispositif de projection (3) constitué d'une optique d'entrée (30) et d'une optique de sortie (40), et éventuellement d'un dispositif à diaphragme (50), est conçu d'une seule pièce, ou le dispositif de projection (3) constitué d'une optique d'entrée (30) et d'une optique de sortie (40) est formé de deux composants séparés l'un de l'autre.

15. Projecteur selon l'une des revendications 1 à 14, **caractérisé en ce que** le au moins un dispositif à diaphragme (50) est disposé sur la surface limite (31') de l'optique d'entrée (30) tournée vers l'optique de sortie (40), ou le au moins un dispositif à diaphragme (50) est formé comme un composant séparé de l'optique d'entrée (30) et de l'optique de sortie (40).

16. Projecteur selon l'une quelconque des revendications 1 à 15, **caractérisé en ce que** la au moins une source lumineuse (2) comprend au moins une source lumineuse à semi-conducteur, par exemple au moins une diode électroluminescente et/ou au moins une diode laser.

17. Projecteur selon l'une des revendications 1 à 16, **caractérisé en ce qu'**au moins un dispositif de fixation optique (4) est disposé entre la au moins une source de lumière (2) et le au moins un dispositif de projection (3), dans lequel au moins un dispositif de fixation optique (4), la au moins une source de lumière (2) rayonne la lumière émise par celui-ci, et lequel dispositif de fixation optique (4) est conçu de telle manière que la lumière sortant de celui-ci est dirigée essentiellement parallèlement, le dispositif de fixation optique (4) étant de préférence conçu comme un collimateur.

18. Projecteur selon l'une des revendications 14 à 17, **caractérisé en ce que** l'optique de sortie (40) est montée de manière à pouvoir être déplacée par rapport à l'optique d'entrée (30), l'optique de sortie (40) étant de préférence déplaçable - dans la position de montage du module d'éclairage (1) - en direction verticale et/ou horizontale.

19. Projecteur selon la revendication 18, **caractérisé en ce que** l'optique de sortie (40) est déplaçable parallèlement à l'optique d'entrée (30) et/ou parallèlement à un dispositif à diaphragme éventuellement existant (50).

20. Projecteur selon la revendication 18 ou 19, **caractérisé en ce qu'**un actionneur (140, 141) est prévu pour déplacer l'optique de sortie (40) dans une direction à chaque fois, dans lequel de préférence l'au moins un actionneur (140, 141) est un actionneur piézoélectrique.

21. Projecteur selon l'une des revendications 1 à 20, **caractérisé en ce que** les diodes électroluminescentes et/ou les diodes laser d'une source lumineuse peuvent être commandées indépendamment les unes des autres.

22. Projecteur selon l'une des revendications 1 à 21, **caractérisé en ce que**, dans le cas de deux ou plusieurs sources lumineuses pour le module d'éclairage (1), les sources lumineuses peuvent être commandées indépendamment les unes des autres.

23. Projecteur selon l'une des revendications 1 à 22, **caractérisé en ce qu'**à chaque microsystème constitué d'une optique de micro-entrée (31) et d'une optique de micro- sortie (41) est associée exactement une source lumineuse, qui comprend de préférence exactement une diode électroluminescente ou exactement une diode laser.

24. Projecteur selon l'une quelconque des revendications 1 à 23, **caractérisé en ce que** deux ou plusieurs groupes de sources lumineuses sont prévus, dans lequel chaque groupe de sources lumineuses comprend au moins une source lumineuse (2), et dans lequel les sources lumineuses (2) d'un groupe de sources lumineuses émettent une lumière de la même couleur (R, G, B), et dans lequel des sources lumineuses de différents groupes de sources lumineuses émettent de la lumière de différentes couleurs (R, G, B), et dans lequel chaque groupe de sources lumineuses éclaire une zone (3R, 3G, 3B) du au moins un dispositif de projection spécifiquement affecté à ces groupes de sources lumineuses, et dans lequel les différentes zones (3R, 3G, 3B) sont de forme identique ou, respectivement, de forme identique. sont conçus pour générer des distributions de lumière identiques, de préférence trois groupes de sources lumineuses étant prévus, de préférence un groupe de sources lumineuses émettant une lumière rouge, un groupe de sources lumineuses émettant une lumière verte et un groupe de sources lumineuses émettant une lumière bleue.

25. Projecteur selon l'une quelconque des revendications 1 à 24, **caractérisé en ce que** deux ou plusieurs groupes de modules lumineux (AA, AA1, AA2, SS1, BF1 - BF8, FL, ABL, SA1, SA2) sont prévus, et dans lequel chaque groupe émet un, deux ou plusieurs modules d'éclairage (1), dans lesquels les modules d'éclairage (AA, AA1, AA2, SS1, BF1 - BF8, FL, ABL, SA1, SA2) d'un groupe ont la même distribution de lumière (LVAA, LVAA1, LVAA2, LVSS1, LVBF1 - LVBF8, LVFL, LVABL, LVSA1, LVSA2), et dans lequel les modules de lumière (AA, AA1, AA2, SS1, BF1 - BF8, FL, ABL, SA1, SA2) de différents groupes produisent différentes distributions de lumière (LVAA, LVAA1, LVAA2, LVSS1, LVBF1 - LVBF8, LVFL, LVABL, LVSA1, LVSA2), les sources lumineuses de chaque groupe de modules d'éclairage pouvant de préférence être commandées indépendamment des sources lumineuses des autres groupes.

26. Projecteur selon la revendication 25, **caractérisé en ce que** les dispositifs de projection (3) des modules d'éclairage (AA, AA1, AA2, SS1, BF1 - BF8, FL, ABL, SA1, SA2) d'un groupe forment un composant commun.

27. Projecteur selon la revendication 24 ou 25, **caractérisé en ce que** les dispositifs de projection (3) de tous les modules d'éclairage forment un composant commun (300).

28. Projecteur selon la revendication 26 ou 27, **caractérisé en ce que** le ou les composants communs (300) est/sont formé(s) sous la forme d'une feuille.

29. Projecteur selon l'une quelconque des revendications 25 à 28, **caractérisé en ce que** deux ou plusieurs groupes sont prévus pour générer une distribution lumineuse différente (LVAA, LVAA1, LVAA2, LVSS1, LVBF1 - LVBF8, LVFL, LVABL, LVSA1, LVSA2), où chaque groupe forme une distribution de lumière différente (LVAA, LVAA1, LVAA2, LVSS1, LVBF1 - LVBF8, LVFL, LVABL, LVSA1, LVSA2) choisie parmi l'une des distributions de lumière suivantes (LVAA, LVAA1, LVAA2, LVSS1, LVBF1 - LVBF8, LVFL, LVABL, LVSA1, LVSA2)
*) Distribution de la lumière en angle ;
*) la distribution de la lumière en ville ;
*) distribution de lumière sur les routes de campagne ;
*) distribution de lumière sur les autoroutes ;
*) Distribution de la lumière pour la lumière auxiliaire pour l'éclairage des autoroutes ;
*) Distribution de la lumière de l'éclairage en courbe ;
*) Distribution de la lumière en faisceau bas ;
*) répartition des feux de croisement sur le tablier ;
*) distribution de la lumière pour un faisceau de croisement asymétrique dans le champ lointain ;
*) Distribution de la lumière pour les feux de croisement asymétriques en champ lointain en mode d'éclairage en virage ;
*) Distribution de la lumière en faisceau large ;
*) Distribution des feux de route sans éblouissement.

30. Projecteur selon l'une quelconque des revendications 25 à 29, comprenant deux ou plusieurs modules de lumière, dans lequel chaque module de lumière a au moins un groupe de sources de lumière, dans lequel chaque groupe de sources de lumière comprend au moins une source de lumière, et dans lequel les sources de lumière d'un groupe de sources de lumière émettent de la lumière de la même couleur (R, G, B), et dans lequel il est prévu au moins deux groupes de sources lumineuses qui émettent de la lumière de différentes couleurs, et dans lequel chaque groupe de sources lumineuses éclaire une région (3R, 3G, 3B) du au moins un dispositif de projection de son module de lumière, laquelle région est spécifiquement attribuée à ces groupes de sources lumineuses, et dans lequel les différentes régions (3R, 3G, 3B) sont de forme identique ou, le cas échéant, de forme identique. Il est prévu de préférence trois groupes de groupes de sources lumineuses, de préférence un groupe de groupes de sources lumineuses émettant une lumière rouge, un groupe de groupes de sources lumineuses émettant une lumière verte et un groupe de groupes de sources lumineuses émettant une lumière bleue, et chaque groupe de groupes de sources lumineuses comprenant au moins un groupe de sources lumineuses.
